(19) Europäisches Patentamt
European Patent Office
Office européen des brevets

(11) **EP 1 713 413 B1**

(12) **EUROPEAN PATENT SPECIFICATION**

(45) Date of publication and mention
of the grant of the patent:
**18.02.2009 Bulletin 2009/08**

(51) Int Cl.:
*A61C 17/34* *(2006.01)*    *A61C 17/22* *(2006.01)*

(21) Application number: **03796935.9**

(22) Date of filing: **10.12.2003**

(86) International application number:
**PCT/US2003/039382**

(87) International publication number:
**WO 2005/063143 (14.07.2005 Gazette 2005/28)**

(54) **MODULAR ELECTRIC TOOTHBRUSHES**

MODULARE ELEKTRISCHE ZAHNBÜRSTEN

BROSSES A DENTS ELECTRIQUES MODULAIRES

(84) Designated Contracting States:
**AT BE BG CH CY CZ DE DK EE ES FI FR GB GR HU IE IT LI LU MC NL PT RO SE SI SK TR**

(43) Date of publication of application:
**25.10.2006 Bulletin 2006/43**

(73) Proprietor: **Church & Dwight Co., Inc.**
**Princeton, NJ 08543 (US)**

(72) Inventor: **CHAN, John, Geoffrey**
**Maineville, OH 45039 (US)**

(74) Representative: **Wilding, Frances Ward et al**
**Haseltine Lake**
**Lincoln House**
**300 High Holborn**
**London WC1V 7JH (GB)**

(56) References cited:
**WO-A-03/082049        WO-A-03/082050**
**WO-A-03/103531        WO-A-03/103531**
**US-A- 3 775 800        US-A- 4 845 795**
**US-A1- 2003 140 435        US-B1- 6 314 605**
**US-B1- 6 371 294**

**Description**

FIELD OF THE INVENTION

The present invention relates to electric toothbrushes and more particularly, modular electric toothbrushes having interchangeable or replaceable components and electric toothbrushes having high efficiency.

BACKGROUND OF THE INVENTION

The present invention relates generally to electric toothbrushes. More particularly, it relates to an improved electric toothbrush with replaceable or exchangeable movable and/or static bristle carriers. Although many different electric toothbrushes exists which offer different advantages and characteristics, these characteristics can increase the costs associated with the toothbrush and can be reflected in higher retail prices for the product. Accordingly, it would be desirable to provide an electric toothbrush that was relatively inexpensive to assemble and produce, but provides the cleaning efficacy and toothbrush characteristics desired by the consumer.

Electric toothbrushes are also known in which certain components of the brush may be interchanged or replaced with like components from other toothbrushes or components that are sold separately. For example, toothbrushes having replaceable head and neck assemblies are known in which the entire head and at least a portion of the neck may be removed from a toothbrush body or its housing, and replaced with another head and neck assembly. U.S. Application No. 09/850,662 teaches an electric toothbrush having a replaceable brush head. Although significant advantages can be gained by such a modular system, entire toothbrush head and neck assemblies are relatively expensive. Additionally, often a replacement of the entire head and neck assembly is unnecessary when only the bristles are worn. Further examples of electric toothbrushes can be found in WO 03/082049, which discloses movable and static bristle carriers, and WO 03/103531, which also discloses movable and static bristle carriers, where the movable bristle carriers move parallel to a longitudinal axis. This latter document is citable for novelty only. Accordingly, a need exists for an alternative modular design for a toothbrush which can be tailored to a consumer's particular needs. For example, a consumer could exchange and/or replace a portion of the toothbrush head for a particular task, or if a portion of the toothbrush head was worn.

SUMMARY OF THE INVENTION

The present invention relates to an electric toothbrush comprising a handle, a neck, and a drive shaft characterized in that: (a) said handle is at a first end of the toothbrush having a motor disposed therein; (b) said neck extends from said handle, and further comprises a receiving member at a second end of the toothbrush, wherein said receiving member receives a plurality of bristle carriers to form a toothbrush head, wherein said plurality of bristle carriers comprises one or more static bristle carrier and one or more movable bristle carrier, and wherein said one or more static bristle carrier and said one or more movable bristle carrier each independently slidingly engage said receiving member within separate channels defined by a surface of said receiving member; and (c) said drive shaft is operatively connecting said one or more movable bristle carrier to said motor, wherein said one or more movable bristle carrier moves in a direction substantially parallel to said longitudinal axis of said receiving member of the toothbrush.

The invention also relates to kits comprising the aforementioned electric toothbrush and one or more static and one or more movable carriers selected from the group consisting of, but are not limited to, brush head tip carriers, static bristle carriers, movable bristle carriers, elastomeric element carriers, oral care composition carriers, and/or dental tool carriers, and/or combinations thereof.

The present invention further relates to a low energy consumption electric toothbrush comprising; a housing assembly including a brush head, a handle, and a neck extending between the brush head and the handle, the housing defining a hollow interior cavity; a movable bristle carrier disposed on the brush head; a motor providing a powered rotating shaft, a drive gear affixed to the shaft, and a power source in electrical communication with the motor and disposed in the hollow interior cavity, a crown gear rotatably supported in the hollow interior cavity and oriented such that the axis of rotation of the crown gear is perpendicular to an axis of rotation of the motor and the drive gear, the crown gear configured and engaged with the drive gear of the motor such that the crown gear completes one revolution for a number, from one to three, of revolutions of the motor, the crown gear including (i) a first cam member extending from a face of the crown gear, the first cam having a center offset from the axis of rotation of the crown gear and (ii) a second cam member extending from a face of the first cam member, the second cam member having an axis of rotation co-extensive with the axis of rotation of the crown gear; a drive shaft having a first end and a second opposite end, the first end engaged with the first cam member and the second cam member of the crown gear, and the second end engaged with the movable bristle carrier; a first plurality of bristles retained on the movable bristle carrier; a second plurality of stationary bristles retained on the brush head; wherein upon operation of the motor, the crown gear is rotated, thereby imparting a reciprocating motion to the drive shaft and to the movable bristle carrier disposed on the brush head.

BRIEF DESCRIPTION OF THE DRAWINGS

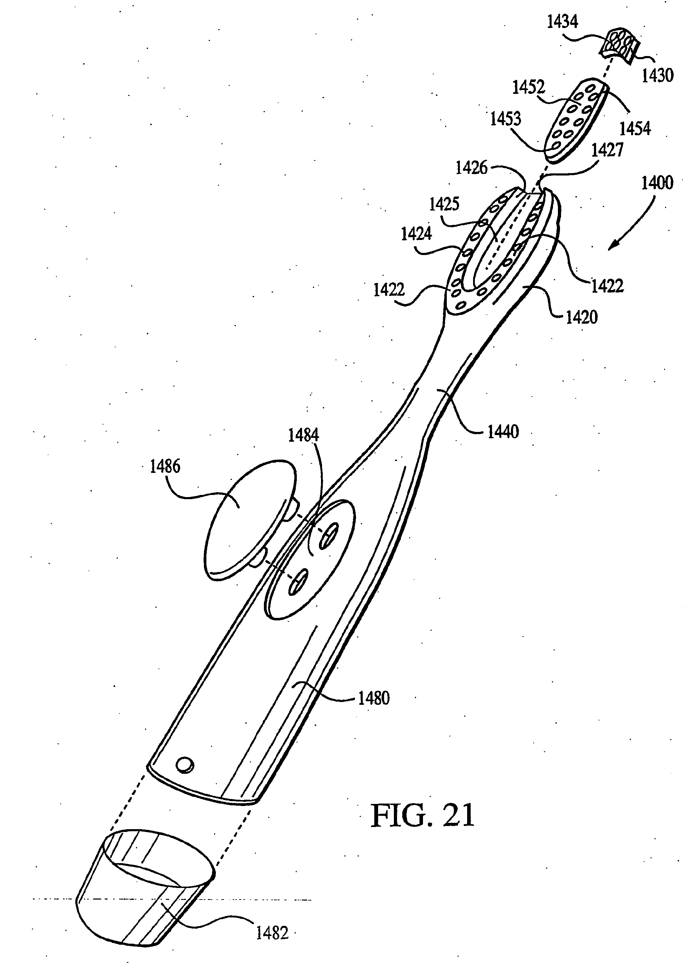

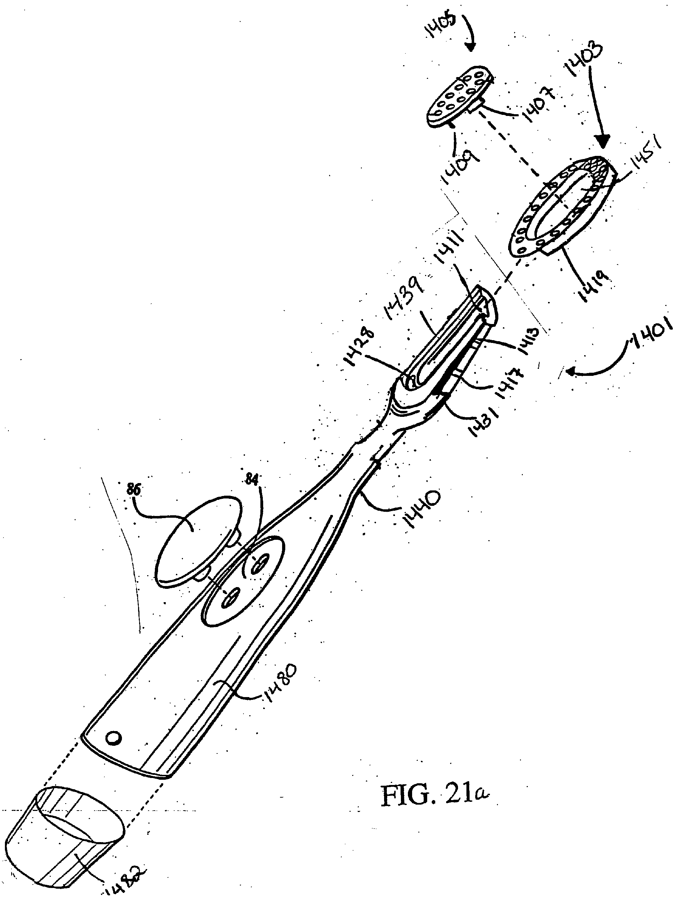

The present invention may take form in various components and arrangements of components, and in various techniques, methods, or procedures and arrangements of steps. The referenced drawings are only for purposes of illustrating embodiments, they are not necessarily to scale, and are not to be construed as limiting the present invention.
Only the embodiments according to figs. 21a, 22a, 23a, 24a and 25a, 26a, 27a fall within the scope of claim 1. The other figures only illustrate specific details.
It is believed that the present invention will be better understood from the following description taken in conjunction with the accompanying drawings in which:

Fig. **1** is a perspective view of a toothbrush.
Fig. **2** is a bottom view of a toothbrush head showing a configuration of various bristle types.
Fig. **3** is another bottom view of a toothbrush head showing a configuration of bristle arrangements.
Fig. **4** is another bottom view of a toothbrush head showing a configuration of bristle arrangements.
Fig. **5** is yet another bottom view of a toothbrush head showing a configuration of bristle arrangements.
Fig. **6** is a partial cross-sectional view showing a brush head.
Fig. **7** is a partial cross-sectional view showing another brush head.
Fig. **8** is a partial cross-sectional view of yet another brush head.
Fig. **9** is a partial cross-sectional view of another brush head.
Fig. **10** is a perspective view of a cam assembly.
Fig. **11** is a perspective view of another cam arrangement.
Fig. **12** is a perspective view showing a partial assembly of a toothbrush.
Fig. **13** is a bottom view of a toothbrush head showing a configuration of bristle arrangements.
Fig. **14** is another bottom view of a toothbrush head showing a configuration of bristle arrangements and illustrates a manner of designating locations of certain bristles.
Fig. **15** is another bottom view of a toothbrush head showing a configuration of bristle arrangements.
Fig. **16** is a bottom view of a brush head.
Fig. **17** is a side view of the brush head shown in Fig. **16**.
Fig. **18** is a bottom view of another brush head.
Fig. **19** is a side view of the brush head shown in Fig. **18.**
Fig. **20** is a perspective view of another toothbrush in.
Fig. **21** is a partial exploded perspective view of the toothbrush illustrated in Fig. **20,** illustrating certain components and their assembly.
Fig. **21a** is a partial exploded perspective view of an embodiment of the toothbrush, made according to the present invention, illustrating certain components and their assembly.
Fig. **22** is a partial exploded perspective view illustrating the assembly of a toothbrush head of the brush shown in Figs. **21** and **22.**
Fig. **22a** is a partial exploded perspective view illustrating the assembly of another embodiment of the toothbrush head.
Fig. **23** is another partial exploded perspective view of the toothbrush head of Fig. **22** illustrating further assembly of components therein.
Fig. **23a** is another partial exploded perspective view of the toothbrush head of Fig. **22a** illustrating further assembly of components therein.
Fig. **24** is another partial exploded perspective view of the toothbrush head of Figs. **22** and **23**, again illustrating further assembly of components therein.
Fig. **24a** is another partial exploded perspective view of the toothbrush head of Figs. **22a** and **23a,** again illustrating further assembly of components therein.
Fig. **25** is a partial side elevational view of the toothbrush head of the brush illustrating one possible bristle configuration.
Fig. **25a** is an end view of the static bristle carrier **1403.**
Fig. **26** is an end view of the toothbrush head taken along line **26-26** in Fig. **25.**
Fig. **26a** is an end view of the movable bristle carrier **1405.**
Fig. **27** is a partial side elevational view of a toothbrush head of the toothbrush illustrating another bristle configuration.
Fig. **27a** is an end view of the toothbrush of **Fig. 21a** prior to engagement of static and movable bristle carriers.
Fig. **28** is an end view of the toothbrush head shown in Fig. **27** taken along line **28-28.**
Fig. **29** is a partial side elevational view of the toothbrush illustrating yet another preferred bristle configuration.

Fig. **30** is an end view of the toothbrush head shown in Fig. **29** taken along line **30-30.**
Fig. **31** is an end view of the toothbrush head illustrating another bristle configuration.
Fig. **32** is an end view of the toothbrush head illustrating yet another bristle configuration.
Fig. **33** is an end view of the toothbrush head illustrating another bristle configuration.
Fig. **34** is a partial side elevational view of the toothbrush head illustrating another bristle configuration.
Fig. **35** is a partial side elevational view of the toothbrush head illustrating another bristle configuration.
Fig. **36** is a partial side elevational view of the toothbrush head illustrating another bristle configuration.
Fig. **37** is a partial side elevational view of the toothbrush head illustrating another bristle configuration.
Fig. **38** is a partial side elevational view of the toothbrush head illustrating another bristle configuration.
Fig. **39** is a partial side elevational view of the toothbrush head illustrating another bristle configuration.
Fig. **40** is a partial side elevational view of the toothbrush head illustrating another bristle configuration.
Fig. **41** is a partial side elevational view of the toothbrush head illustrating another bristle configuration.
Fig. **42** is a partial side elevational view of the toothbrush head illustrating another bristle configuration.
Fig. **43** is a partial side elevational view of the toothbrush head illustrating another bristle configuration.
Fig. **44** is a partial side elevational view of the toothbrush head illustrating another bristle configuration.
Fig. **45** is a partial side elevational view of the toothbrush head illustrating another bristle configuration.
Fig. **46** is a planar bottom view of a toothbrush head (without bristles) of the toothbrush.
Fig. **47** is a cross-sectional view of the toothbrush head illustrated in Fig. **46**, taken across line 47-47.
Fig. **48** is a partial exploded view of the toothbrush.
Fig. **49** is a partial exploded view of the toothbrush.
Fig. **50** is a perspective view of a portion of the drive mechanism.
Fig. **51** is a side elevational view of the portion of the drive mechanism illustrated in Fig. **50**.
Fig. **52** is a perspective view of the brush head and neck of a toothbrush.
Fig. **53** is a planar view of another brush head and neck of a toothbrush.
Fig. **54** is a planar view of yet another brush head and neck of a toothbrush.
Fig. **55** is a partially exploded view of an engagement assembly for converting rotary motion to reciprocating motion, preferably utilized in the present invention toothbrushes.
Fig. **56** is a top planar view of a gear of the assembly depicted in Fig. **55**.
Fig. **57** is a side elevational view of the gear shown in Fig. **56**.
Fig. **58** is a partial cross-sectional view of the assembly of Fig. 55 illustrating the engagement between a drive shaft and the gear.
Fig. **59** illustrates the underside of an end of the drive shaft of the assembly of Fig. **55**.
Fig. **60** is a top, planar view of the assembly of Fig. **55** illustrating the operation of that assembly.

## DETAILED DESCRIPTION OF THE INVENTION

The present invention is based upon a discovery that significant cleaning efficacy results from a toothbrush that utilizes a combination of static bristles, and movable bristles that are powered. Preferably, the movable bristles reciprocate when powered, and most preferably, the movable bristles reciprocate in a direction generally parallel to the longitudinal axis of the toothbrush. It is contemplated that the movable bristles may also reciprocate in a direction generally perpendicular to the longitudinal axis. Although reciprocation is the preferred type of movement for the movable bristle carrier, the present invention encompasses other types of movement for the movable bristle carrier. In all of the preferred embodiments described herein, the various movable bristles are all powered or carried by a single movable component. This is described in greater detail herein. The present invention is also based upon a discovery of particular patterns or configurations for the static bristles, particularly when utilized in conjunction with the movable and powered bristle set. Furthermore, featuring a movable bristle carrier that reciprocates and which is at least partially surrounded by an array of static bristles, is particularly well suited for large scale manufacturing. That is, the various preferred embodiment brushes described herein are relatively inexpensive to manufacture as a result of their remarkable simplicity and novel structure. These and other aspects are described herein.

The present invention is also based upon a unique design for a unitary body or housing for an electric toothbrush that incorporates an integral neck and brush head assembly. The one-piece body or housing greatly simplifies assembly of the toothbrush and reduces manufacturing costs associated with the brush. The present invention also provides a novel modular design for the brush head that enables a user to choose the bristles and/or elements for the brush head. This novel modular design can be achieved by engaging one or more static carrier(s) and one or more movable carrier (s) with a receiving member extending from the distal end of the neck of the toothbrush. A carrier is an element, such as a plate, which engages the receiving member and which may contain structures or compositions that interact with the oral cavity tissue and/or teeth. The plurality of static and/or movable carriers can include, but are not limited to, bristle carriers, brush head tip carriers, elastomeric element carriers, oral care composition carriers, and dental tool carriers, or any combination thereof. The plurality of static and/or movable carriers can be of many shapes and sizes, so long as the carriers can engage the receiving member of the toothbrush. In one embodiment the static carrier(s) can be a static bristle carrier, and/or the movable carrier(s) can be a movable bristle carrier. The plurality of carriers can be brush head tips. Brush head tip carriers can be located on the distal most portion of the toothbrush head. These brush head tips can constitute a relatively large portion of the brush head. Certain embodiments of the invention include these aforementioned elastomeric elements or flexible, outwardly extending members that are disposed on the brush head. The static carrier and the moving carrier of the toothbrush head also may include elastomeric elements along with the bristles. The static portion and the moving portion can each include bristles and elastomeric elements, which are used for gently massaging the user's gums while brushing. The elastomeric elements can be located on the perimeter of the static and moving portions or among the bristles on the static and moving portions of the brush head, and can be formed from any elastomeric material including, but not limited to, rubber. Elastomeric elements include, but are not limited to, those discussed in U.S. Patent Nos. 5,987,688, and 5,735,011. The dental tool supported and/or conveyed by the carriers include, but are not limited to, gum massaging tools, scraping tools, cleaning tools, flossing tools, polishing cups, rubber picks and applicators. For instance, elements and/or tools that are specifically designed for applying whitening agents to the teeth may be used. An example of polishing cups include, but are not limited to, those discussed in U.S. Patent No. 5,930,860. Additionally, bristle arrangements that provide gum and interdental stimulation may be used, such as discussed in U.S. Paten No: 5,926,897. Oral care compositions include, but are not limited to, compositions disposed on/within a carrier or delivered by a carrier for the care or treatment of the teeth or oral tissue, and/or other compositions placed on/within a carrier which facilitate the treatment and/or care of the teeth and oral tissue. Examples of oral care compositions include, but are not limited to, tartar control compositions, tooth whitening compositions, abrasives, fluoride, and oral sensation compositions such as flavoring. Examples of oral care composition carriers include, but are not limited to, those disclosed in U.S. Patent No. 5,851,551, and applications WO09413870A1, WO9804167A1.

Before describing the various embodiments of the toothbrush, it is instructive to define the various types of motions that the movable bristles may undergo. As used herein, the term "angular motion" refers to any angular displacement. "Linear motion" is movement along a straight or substantially straight, line or direction. "Primarily linear motion" is described below. "Curvilinear motion" is movement that is neither completely linear nor completely angular but is a combination of the two (e.g., curvilinear). These motions can be constant or periodic. Constant motion refers to motion that does not change direction or path (i.e., is unidirectional). Periodic motion refers to motion that reverses direction or path. Constant angular motion (i.e., motion that extends through 360 degrees or more) that is substantially in the form of a circle is referred to as rotary motion. Periodic angular motion is motion that extends through less than 360 degrees and is referred to as oscillating motion. Curvilinear motions can also be either constant (i.e., unidirectional) or periodic (i.e., reverses direction). Periodic linear motion is referred to as "reciprocation". The above-described motions can also occur along one or more axes of a bristle carrier.

Furthermore, it is useful to define the term "static" bristles and the term "movable" bristles. The term static bristles refer to bristles that are secured or static to the brush head or body of the toothbrush or other component thereof so that the bristles, and specifically, the base of the bristles, do not move with regard to the toothbrush during use. Restated, static bristles refer to bristles that are fixed to the toothbrush such that their base or point of attachment does not move with respect to the toothbrush, and the static bristles are not operatively connected to the drive shaft. The static bristles can be affixed to a static carrier. One or more of these static bristle carriers can then engage the receiving member of the toothbrush, to form the toothbrush head. Although these carriers and the bristles disposed thereon are static, it is recognized that the ends of the bristles or regions distal from the base of a bristle or group of bristles may move as a result of flexing of the bristle, but the base of the static bristle does not move with respect to the toothbrush. Additionally, the static carrier on which the bristles can be disposed can be slideably released from the toothbrush. Thus the user can replace and/or exchange the static carriers as needed. Any movement of the bristles does not result from an operative connection to the drive shaft and/or motor, as opposed to movable bristles, which do move as a result of an operative connection to the drive shaft.

The term movable bristle refers to a bristle in which the base of the bristle moves with respect to the toothbrush, and preferably with respect to the longitudinal axis of the brush. Generally, this configuration is accomplished by affixing or supporting the base of the bristle to a mounting component, such as a carrier that is movable with respect to the brush. The one or more movable bristle carrier(s) can then engage the receiving member of the toothbrush, to complete the formation of the toothbrush head. Restated, a movable bristle is a bristle that is movable, and preferably, slideably moves with respect to the longitudinal axis of the brush as a result of an operative connection with the drive shaft.

The novel modular design of the inventive toothbrush can be achieved by the unique structure of the brush head. As used herein, the phrase "toothbrush head" comprises one or more static carrier(s) and one or more movable carrier(s), and the receiving member. The one or more static carrier(s) and the one or more movable carrier(s) engage the toothbrush via a receiving member. The receiving member is located at the distal end of the neck of the toothbrush and retains the carriers. The receiving member can be provided with bristles, or the receiving member can be devoid of bristles.

In either instance, the head of the toothbrush can be formed by the sliding engagement of the one or more static carrier(s) and the one or more movable carrier(s) to the receiving member. In one embodiment, the static carrier engages the receiving member, and can substantially surround the movable carrier. In another embodiment a plurality of static carriers engage the receiving member, such that when the plurality is engaged, the static carriers can substantially surround the movable carrier. Embodiments of the modular design of the present invention include toothbrushes wherein the one or more static carrier(s) and the one or more movable carrier(s) comprise bristles. The one or more static bristle carrier(s) and the one or more movable bristle carrier(s) independently, slidingly engage the receiving member, located at the distal end of the neck of the toothbrush. This receiving member can provide support for the one or more static bristle carrier(s) and the one or more movable bristle carrier(s). Additionally, other carriers can engage the receiving member of the toothbrush including, but not limited to, dental tool carriers, elastomeric element carriers, oral care composition carriers, and/or combinations thereof.

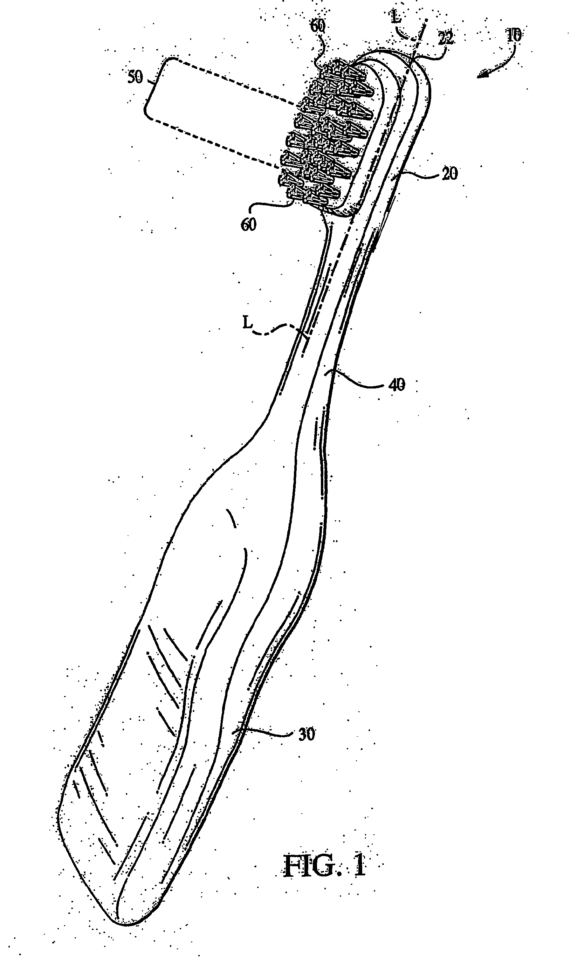

Referring to Fig. **1**, a toothbrush **10** is illustrated. The toothbrush **10** comprises a body **30,** a head **20** and a neck **40** extending between the body **30** and the head **20**. The head **20** defines a distal-most end **22.** The head **20** and the neek **40** generally extend along a longitudinal axis illustrated in Fig. **1** as axis **L.** Disposed along the head **20** are a plurality of static bristles **60** and a collection of interiorly disposed bristles **50** which are movable as described herein. The movable bristles **50** are supported on and retained by a movable bristle carrier. The movable bristle carrier may undergo a wide variety of motions as noted above.

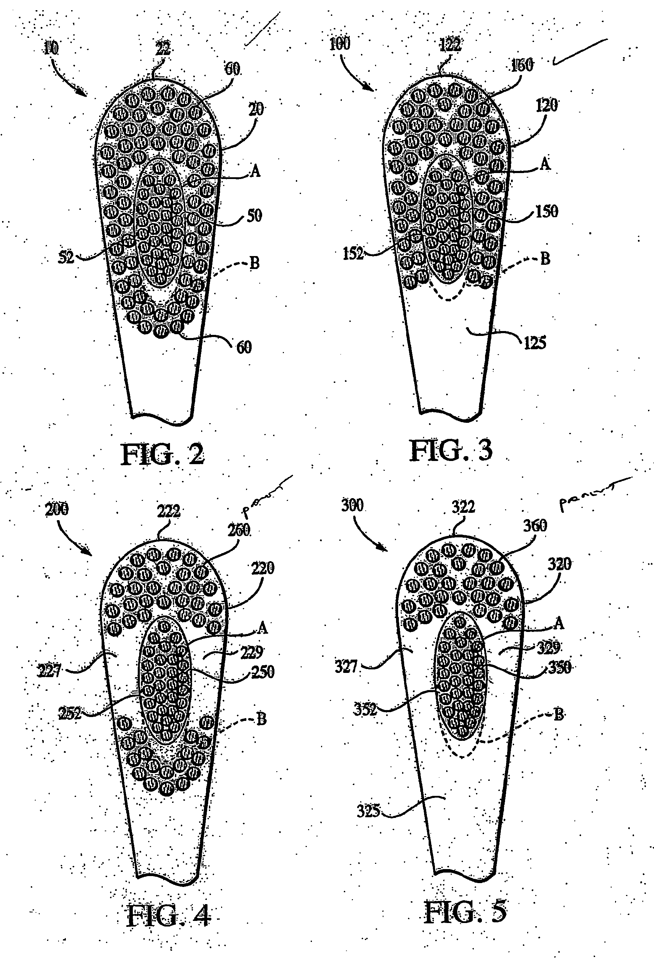

Figs. **2-5** and **13** illustrate various configurations for the arrangement of the static bristles and the movable bristles. Fig. **2** is a detail view of the toothbrush **10** shown in Fig. **1** and its head **20.** As can be seen from Fig. **2,** the static bristles **60** generally extend entirely around the collection of movable bristles **50.** The movable bristles **50** are disposed and situated on a movable bristle carrier **52.** The bristle carrier **52** is movable between two positions shown in Fig. **2** as position A,and position **B.** The bristle carrier **52** may be moved back and forth between position **A,** in which the bristle carrier **52** is proximate the distal-most end **22** of the brush head **20,** and position **B** shown in Fig. **2** by dashed lines. The direction of movement of the bristle carrier **52** as it reciprocates between positions **A** and **B** is generally parallel to the longitudinal axis of the head **20** and neck (not shown in Fig. **2**) as noted in Fig. 1 as axis **L.**

Fig. **3** illustrates another arrangement of bristles along a brush head **120** of a toothbrush **100.** In this embodiment, a plurality of static bristles **160** extend substantially around the periphery or perimeter of a collection of movable bristles 150. The movable bristles **150** are supported and retained along a movable bristle carrier **152.** The bristle carrier **152** is movable between two positions **A** and **B** shown in Fig. 3. In this preferred configuration, the region **125** along the brush head **120** does not contain any bristles, either static bristles or movable bristles. As previously described with respect to Fig. **2**, the bristle carrier **152,** and thus movable bristles **150,** preferably may reciprocate between positions **A** and **B.** As will be noted from Fig. 3, position **A** is proximate the distal-most end **122** of the brush head **120.**

Fig. **4** illustrates another embodiment of the toothbrush head **220** of a toothbrush **200.** In this embodiment, a collection of static bristles **260** are located at opposite regions of the brush head **220** around a collection of movable bristles **250.** The movable bristles **250** are supported and retained along a movable bristle carrier **252.** The movable bristle carrier **252** is movable between position **A** and position **B** as shown in Fig. **4**. It will be noted that two regions are defined, between the collection of static bristles **260,** which do not contain any bristles. These regions are designated in Fig. 4 as regions **227, 229.** As previously noted with respect to Fig. **2,** the bristle carrier **252,** and thus the movable bristles **250,** preferably may reciprocate between positions **A** and **B.** Position A is proximate the distal-most end **222** of the brush head **220.**

Fig. **5** illustrates yet another embodiment toothbrush head **320** of a toothbrush **300.** In this embodiment, a collection of static bristles **360** extend only partially around a collection of movable bristles **350** supported and retained on a movable bristle carrier **352.** The movable bristle carrier **352** is movable between two positions shown in Fig. **5** as positions **A** and **B.** It will be noted that regions **329, 327, 325** are defined around the periphery of the collection of movable bristles **350.** These regions do not contain any bristles and particularly do not contain any static bristles **360.** As previously noted with regard to **Fig. 2,** the bristle carrier **352,** and thus the movable bristles **350,** preferably may reciprocate between positions **A** and **B.** Position **A** is proximate the distal-most end **322** of the brush head **320.**

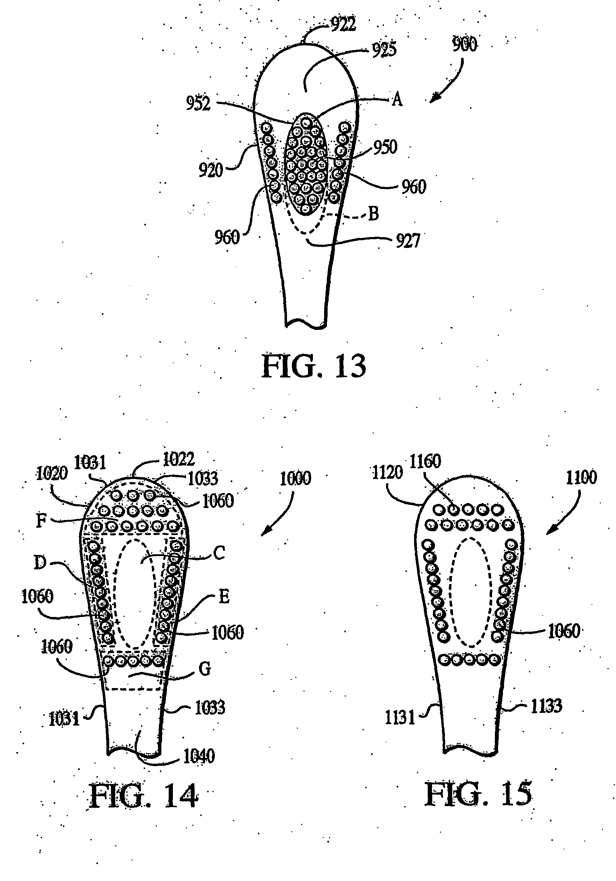

Fig. **13** illustrates another embodiment of the toothbrush head **920** of a toothbrush **900.** In this embodiment, a collection of static bristles **960** are located at opposite regions of the brush head **220** around a collection of movable bristles **950.** Specifically, the static bristles **960** are located along the sides of the brush head **920.** Regions **925** and **927** are defined between the groups of static bristles, and preferably as shown in Fig. **13.** The movable bristles **950** are supported and retained along a movable bristle carrier **952.** The movable bristle carrier **952** is movable between position **A** and position **B** as shown in Fig. **13.** As previously noted with respect to Fig. **2,** the bristle carrier **952,** and thus the movable bristles **950,** preferably may reciprocate between positions **A** and **B.** Position A is proximate the distal-most end **922** of the brush head **920.**

It will be noted that the preferred bristle configurations are based upon the movable bristles located generally within a middle region or interior of the brush head, and static bristles at least partially surrounding the medially disposed movable bristles. This is explained in greater detail herein.

For certain applications, it is preferred that the static bristles surround 100% of the perimeter or periphery of the collection of movable bristles. In other applications, it is preferred that the static bristles surround or extend along about 75% to about 100% of the perimeter of the movable bristles. In still other applications, it is preferred that the static bristles extend along about 50% to about 75% of the perimeter of the movable bristles. In further applications, it is preferred that the static bristles extend along about 25% to about 50% of the perimeter of the movable bristles. And in other applications, it may be preferred that the static bristles extend less than 25% around the perimeter of the movable bristles. As noted, the static bristles preferably extend along at least a portion of the outer periphery of the collection of movable bristles. It is not necessary for certain embodiments that the static bristles extend continuously about the periphery of the set of movable bristles. That is, the present invention encompasses bristle configurations in which the static bristles extend intermittently along or about the outer periphery of the collection of movable bristles.

The terms "completely encircling (or encircle)", "substantially encircling (or encircle)", "partially encircling (or encircle)", and "partially surrounding (or encircle)" are used herein to refer to particular configurations of static bristles and their relative location with respect to the movable bristles. The term "completely encircling" refers to a configuration in which the static bristles completely encircle, or are located entirely around, the perimeter of the movable bristles. It will be understood that when static bristles are described as encircling or extending along the perimeter or portion thereof of the movable bristles, minute or relatively small spaces may exist between individual bristles or groups of bristles. These spaces are on the order of only 1 to 10 diameters of a typical bristle. The term "substantially encircling" refers to a configuration in which the static bristles extend along at least 80% of the perimeter of the movable bristles. Specifically, substantially encircle includes configurations in which the static bristles extend along 80% or more, 90% or more, or 95% or more of the perimeter of the movable bristles. The term "partially encircling" refers to a configuration in which the static bristles extend along a portion of the perimeter of the movable bristles, and preferably, extend along a portion that is less than 80% of the distance along that perimeter. The term "partially surrounding" refers to a configuration in which the static bristles partially surround, and do not completely or entirely surround, the movable bristles.

As noted, the movable bristle carrier may undergo a wide variety of motions. For example, the movable bristle carrier may undergo angular motion, linear motion, or curvilinear motion. The movement of the bristle carrier may be constant or periodic. Generally, the preferred motion for the movable bristle carrier is periodic linear motion or reciprocation.

The movable bristle carrier may be in a variety of forms and shapes. The preferred shape for the movable bristle carrier is oval, such as generally shown in the referenced figures, such as in Figs. **2-5**. It is generally preferred that the movable bristle carrier is elongated in shape, more preferably oval, and most preferably, have proportions according to a certain range of ratios of length to width dimensions. Most preferably, the movable bristle carrier is in the shape of an oval and has a length (as measured along a major axis of its oval shape) to width (as measured along a minor axis of its oval shape) of from about 4:1 to about 1.2:1. The width of the movable bristle carrier (again, as measured along a minor axis of its oval shape), approaches the width of the brush head, at that location along the brush head. For those embodiments of the present invention in which the bristle carrier is oval-shaped, and in which the bristle carrier moves in a reciprocating fashion, the carrier is oriented such that movement occurs generally parallel to the major axis of the oval shape. Preferably, the width of the movable bristle carrier is from about 50% to about 90% of the width of the brush head, and most preferably from about 60% to about 80%.

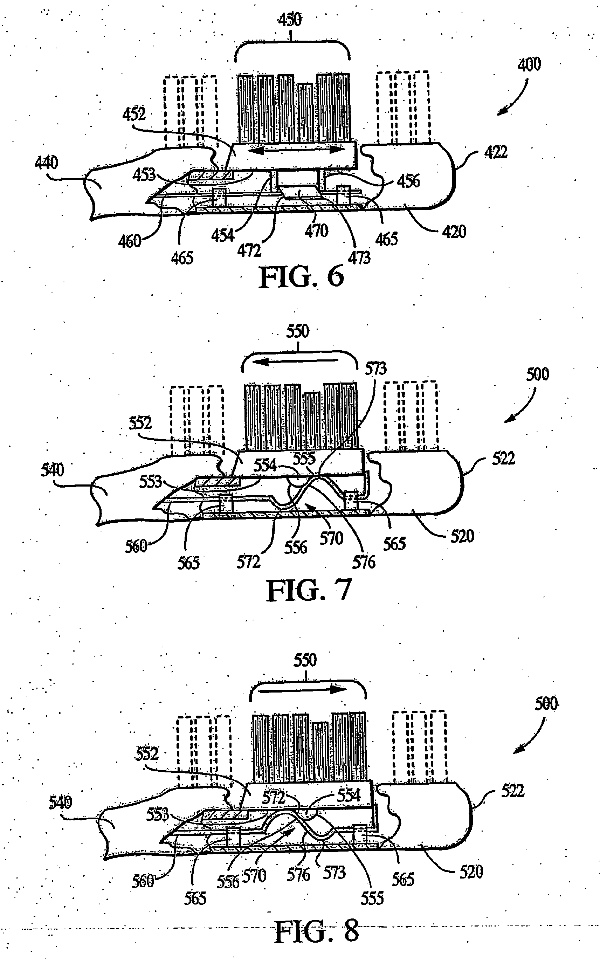

Referring to Fig. **6,** another preferred embodiment of a head **420** for a toothbrush **400** will now be described. The head **420** includes an inner bristle carrier **452** that is slidingly mounted in slots defined along the head **420**. The inner bristle carrier **452** supports and retains a plurality of movable bristles **450**. The inner bristle carrier **452** is reciprocatingly driven in the same general longitudinal direction as the longitudinal axis of the head **420**. The inner bristle carrier **452** and bristles **450** are preferably at least partially surrounded by an array of static bristles shown in Fig. **6** by dashed lines. The toothbrush **400** includes an electric motor (not shown) and a drive mechanism, the drive shaft of which is illustrated in Fig. **6** as shaft **460**. A cam **470** engaged with the shaft **460** operatively interconnects the shaft **460** with inner bristle carrier **452**. Optionally, the shaft **460** can be supported by shaft supports **465**. The shaft supports **465** may include C or U shaped portions (not shown) that receive the shaft **460**. Other means for retaining the shaft **460** in a support are known in the art. The cam **470** can comprise a shaped element or bead, with an appropriate eccentric configuration, placed or molded over and firmly secured to the shaft **460**. In one arrangement, the cam **470** is cylindrically shaped with a pair of acutely angled surfaces **472, 473** which are inclined in the same direction and at the same angle of inclination, but which are disposed at opposite ends of the cam **470**. In other words, the angled surfaces **472, 473** are the surfaces resulting from a diagonal slice through the cylinder of the cam **470**. The direction of inclination and angle of inclination can be varied as desired to change the frequency and stroke of the inner bristle carrier **452**. First and second cam followers **454, 456** are provided that are secured to or extend from the underside **453** of the bristle carrier **452**. The cam followers **454, 456** are offset or spaced from each other so that cam **470** is disposed between the cam followers **454, 456** which straddle and/or capture the cam **470**. The angled surfaces **472, 473** of the cam **470** slidingly engage the free ends of the cam followers **454, 456**. As the shaft **460** rotates, the first acutely angled surface **472** of the cam **470** comes into contact with a surface of the first cam follower **454** and drives the cam follower, and therefore, the inner bristle carrier **452,** away from the end **422** in a direction generally the same as the direction of the longitudinal axis of the head **420.** The inner bristle carrier **452** is glided by the longitudinally extending slots. As the shaft **460** continues to rotate, the cam **470** disengages from the first cam follower **454.** The second acutely angled second surface **473** of the cam **470** then comes into contact with a surface of the second cam follower **456** and drives the second cam follower **456,** and therefore the inner bristle carrier **452,** back toward the end **422** of the head **420.**

Referring to Figs. **7** and **8,** another embodiment of a toothbrush head **520** suitable for use with an electric toothbrush **500** will now be described. The head **520** includes an inner bristle carrier **552** that is slidingly mounted in slots (not shown) defined in the head **520.** The inner bristle carrier **552** supports and retains a plurality of bristles **550.** The inner bristle carrier **552** is reciprocatingly driven in the same general longitudinal direction as the longitudinal axis of the head **520.** The toothbrush **500** includes a motor (not shown) and a drive mechanism that includes a rotating drive shaft **560.** The head **520** extends from a neck **540** and has a distal-most end **522.** A cam **570** included on the shaft **560** operatively interconnects the shaft **560** with inner bristle carrier **552.** Optionally, the shaft **560** can be supported by shaft supports **565.** The shaft supports **565** may include C or U shaped portions (not shown) that receive the shaft **560.** Other means for retaining the shaft **560** in a support are known in the art. The cam **570** is provided in the form of a plurality of bends **572, 573** in the shaft **560.** The bends are sinusoidal or curvilinear in nature in that each bend has one or more adjacent arcuate portions. The bends each have an apex and the apexes are disposed on opposite sides of the shaft **560.** A hemispherically-shaped cam follower **554** depends from a bottom surface **553** of the inner bristle carrier **552** and is disposed between the apexes of the cam **570.** As the shaft **560** rotates, a surface **576** of the cam **570** comes into contact with a first surface **555** of the cam follower **554** and drives the cam follower **554,** and therefore the inner bristle carrier **552,** away from the end **522** in a longitudinal direction generally the same as the longitudinal axis of the head **520.** As the shaft **560** continues to rotate, the cam surface **576** disengages from the first cam follower surface **555.** As shown in Fig. **8,** the cam surface **576** then comes into contact with a second surface **556** of the cam follower **554** and drives the cam follower **554,** and therefore the inner bristle carrier **552,** back toward the end **522.** The motion of the bristle carrier **552** can be varied by changing the spacing between the apexes **572, 573** and/or the amplitude, shape, or height of the apexes **572, 573,** length and inclination of the cam surface **576,** and inclination of the surfaces **555, 556** of the cam follower **554.**

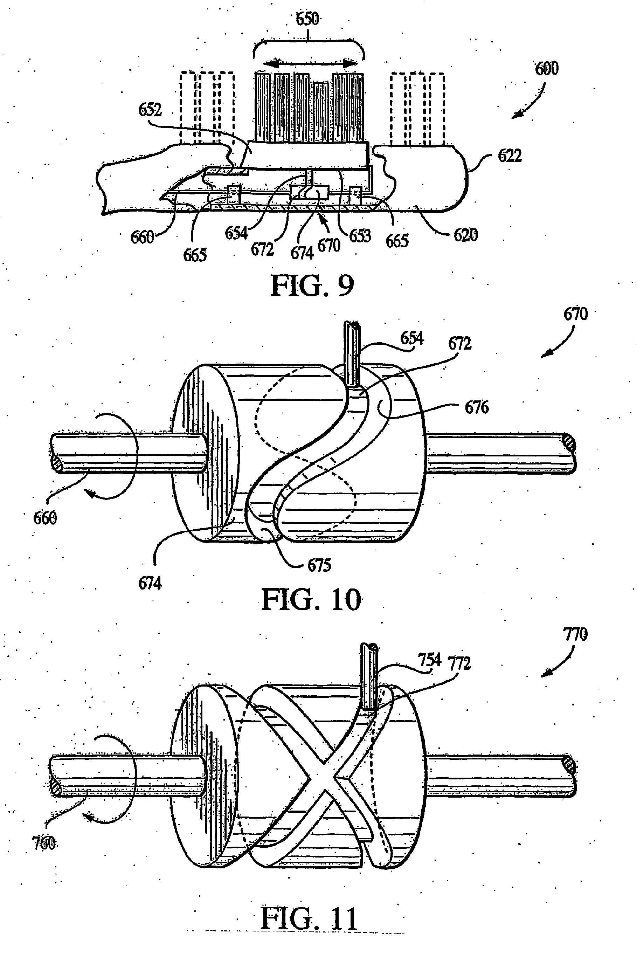

Referring to Fig. **9,** another embodiment of a toothbrush head **620** for an electric toothbrush **600** will now be described. The head **620** includes an inner bristle carrier **652** that is slidingly mounted in slots (not shown) defined in the head **620.** The head **620** includes a distal end **622.** The inner bristle carrier **652** supports and retains a plurality of bristles **650.** The inner bristle carrier **652** is reciprocatingly driven in the same general longitudinal direction as the longitudinal axis of the head **620.** The toothbrush **600** includes a motor (not shown) and a drive mechanism that includes a rotating drive shaft **660.** A cam **670** included on the shaft **660** operatively interconnects the shaft **660** with the inner bristle carrier **652.** Optionally, the shaft **660** can be supported by shaft supports **665.** The shaft supports **665** may include C or U shaped portions (not shown) that receive the shaft **660.** Other means for retaining the shaft **660** in a support are known in the art. The cam **670** is provided in the form of a cylindrically-shaped component **674** placed or molded over and firmly secured to the shaft **660.**

As shown in Fig. **10,** the cam **670** includes a spiral or helical groove **672** defined along the outer surface of the cylindrically shaped component **674.** The spiral or helical groove **672** preferably extends around the circumference of the component **674** and spirals about a longitudinal axis of the component **674** which may, for example, coincide with the longitudinal axis of the shaft **660.** The stroke and frequency of the motion imparted to a cam follower **654** (shown in Figs. **9** and **10)** by the cam **670** can be varied by changing the shape and dimensions of the groove **672.** For example, the groove **672** defined in the component **674** would provide one complete stroke of the inner bristle carrier **652** (i.e., one cycle away from and back toward the end of the head **622)** for one revolution of the shaft **660.**

Fig. **11** illustrates an alternate cam **770** having a helical groove **772** which is provided in the form of a figure eight. This would only provide one-half a stroke (i.e., only either translation toward or away from the end of the brush head) for one revolution of the shaft **760.** A cam follower **754** is disposed in the groove **772** and is engaged to a movable bristle carrier.

Returning to Figs. **9** and **10,** a cam follower **654** depends from a bottom surface **653** of the inner bristle carrier **652.** The cam follower **654** is slidingly received within the groove **672.** As the shaft **660** rotates, a first surface **675** of the spiral groove **672,** such as a side wall thereof, comes into contact with a first surface of the cam follower **654** and drives the cam follower **654** and therefore the inner bristle carrier **652,** away from the end **622** of the brush head **620,** in a longitudinal direction generally the same as the longitudinal axis of the head **620.** As the shaft **660** continues to rotate, the cam follower **654** reaches an apex of the spiral groove **672** and the first surface **675** of the spiral groove **672** disengages from the cam follower **654.** A second surface **676** of the groove **672,** such as the opposite side wall of the groove **672,** then comes into contact with the cam follower **654** and drives the cam follower **674,** and therefore the inner bristle carrier **652,** back toward the end **622** of the brush head **620.**

The various reciprocating bristle carriers described herein may also utilize a drive mechanism that provides a shaft that rotates. Furthermore, it will be appreciated that other motor and reciprocating or rotating shaft arrangements can be substituted. For example, US Patent Nos. 5,226,206; 5,524,312; 5,383,242; 5,465,444; 5,504,959; 5,836,030; 4,845,795; 5,404,608; 5,359,747; and 5,617,601, disclose other motor and reciprocating shaft arrangements that might be suitable. In addition, the electric toothbrush of Fig. **9** might be provided with a replaceable head. A suitable arrangement which can be adapted to the present invention is disclosed in US Application Ser. No. 09/850,662, filed May 7, 2001. Similarly, the drive mechanisms disclosed in U.S. applications Serial Nos. 10/114,780 filed April 3, 2002; and 10/128,018 filed April 22, 2002, are also contemplated for use in conjunction with the present invention.

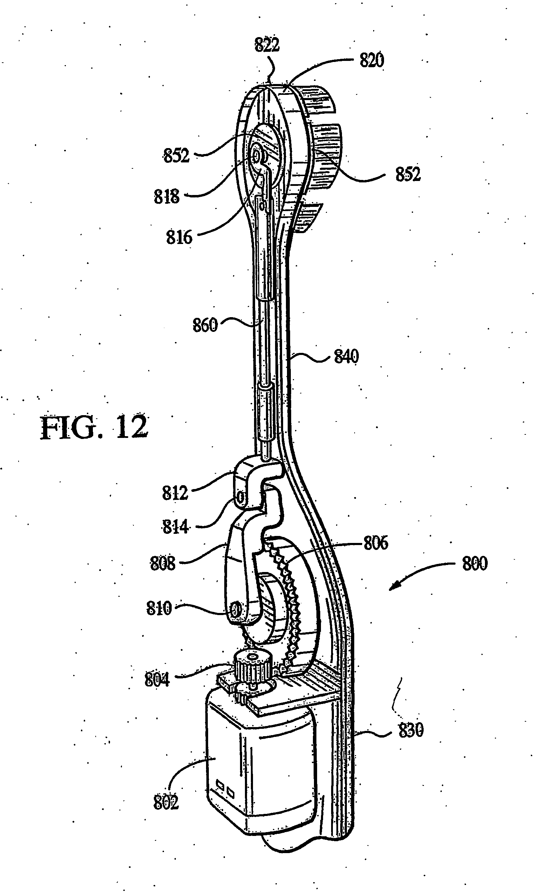

Another preferred embodiment toothbrush using a reciprocating drive shaft is illustrated in Fig. **12.** Fig. **12** illustrates an electric toothbrush **800** comprising a toothbrush head **820,** a body or handle **830,** and an elongated neck **840** extending therebetween. The drive train, which includes various shafts and gears that transmit motion from a motor to an inner bristle carrier **852** is similar to that described in US Patent No. 6,178,579. The handle **830** is hollow and includes a motor **802** and batteries (not shown) for powering the motor. In one embodiment of the invention the toothbrush comprises a power source of one battery. In another embodiment of the invention the toothbrush comprises a power source of two batteries. A rechargeable power source can be substituted for the batteries. The batteries can connect the motor via a wire, a metal strip, direct contact, and/or any combination thereof. The head **820** has a longitudinal axis extending therethrough. The longitudinal axis extends in the same general longitudinal direction as a longitudinal axis of the shaft **860.** The inner bristle carrier **852** is disposed along the head **820,** wherein the end **822** is at the distal-most point of the head **820.** Although the inner bristle carrier **852** is preferably oval in shape, other shapes can be utilized. Further, while the inner bristle carrier **852** is disposed proximate the end **822** of the head **820,** it will be appreciated that the carrier **852** can be disposed away from the end **822** and other features, such as static bristles, can be disposed around at least a portion of the perimeter of the inner bristle carrier **852.** In this embodiment, the inner bristle carrier **852** only reciprocates and does not oscillate, or perform any other rotational or oscillatory motion.

A first gear **804** is operatively connected to and powered by the motor **802.** A second gear 806 is operatively connected to the first gear **804.** The rotational axis of the second gear **806** is approximately normal to the rotational axis of the first gear **804** such that the teeth of the first gear **804** mesh with teeth of the second gear **806,** thus causing the second gear **806** to rotate as the first gear **804** rotates.

A first arm **808** is eccentrically and pivotably connected to the second gear **806** via a pin **810** or other fastening device. Due to the eccentric connection, the rotational motion of the second gear **806** is converted into a reciprocating motion of the first arm **808.** A second arm 812 is pivotably connected to the first arm **808** via a pin **814** or other fastening device. The shaft **860** is secured, such as by a press fit, to the second arm **812.** The shaft **860** is housed at least partially within the neck **840.** The shaft **860** is also engaged with a third arm **816.** The third arm **816** is connected at its terminal end to the inner bristle carrier **852** via a pin **818** or other fastening device. The terminal end of the third arm **816** is offset from the longitudinal axis of the shaft **860** so that it is pinned adjacent the outer periphery of the inner bristle carrier **852.** This offset arrangement converts the reciprocating motion of the third arm **816** into a reciprocating motion of the inner bristle carrier **852,** wherein the inner bristle carrier **852** reciprocates about an axis approximately parallel to the longitudinal axis of the shaft **860.**

While various brush head embodiments of the present invention have been illustrated for simplicity with tufts or groups of bristles that extend in a direction substantially perpendicular to the longitudinal axis of the head from which they extend, it is contemplated that the bristles might be arranged differently to complement or further enhance the static bristles or the motion of the movable bristles. Some or all of the bristles might extend in a direction which forms an acute angle with a top surface of a bristle carrier, and may extend in a forward or rearward direction. In another embodiment, some of the bristles might extend outwardly away from the head, in another direction, again forming an acute angle with respect to the top surface of the bristle carrier. Elastomeric elements or massaging bristles or bristles of varying height might also be used, such as described in US Patent Nos. Des. 330,286, and Des. 434,563. Other preferred bristle arrangements suitable for use include those arrangements described in whole or part in US Patent Nos. 6,006,394; 4,081,876; 5,046,213; 5,335,389; 5,392,483; 5,446,940; 4,894,880; and International Publication No. WO99/23910.

The electric toothbrushes of the present invention can be provided with any combination of bristle or elastomeric tip types, dimensions, combinations, angles and arrangements. Tufts of bristles may alternate in height. By "tuft", herein, is meant a set of one or more bristles fastened to the brush at a common point. In one embodiment a plurality of tall tufts and a plurality of shorter tufts are disposed along the brush head. The difference in length between the tall tufts and the shorter tufts is between about 0.5 mm and about 2.5 mm in one embodiment and between about 1 mm and about 2 mm in other embodiments. The tall and short tufts of bristles can be provided with different characteristics. For example, the tall tufts of bristles may be relatively soft for gently cleaning and massaging gums of a user while shorter tufts of bristles may be somewhat firmer for interdental cleaning (or vice versa). This arrangement allows the longer (and typically softer) bristles to be pressed, bent and deflected against the gums of the user before the shorter (and typically firmer) bristles contact the teeth and gums of the user. Therefore, for example, soft bristles can be applied with more force while stiffer (and perhaps less comfortable) bristles are applied with less force.

In a particularly preferred embodiment, the present invention provides a bristle configuration in which the movable bristles, i.e. those supported by and secured to the movable bristle carrier, have a total bristle length that is less than the length of the static bristles that at least partially encircle or extend alongside the movable bristle carrier and bristles secured thereto. A further variation of this preferred bristle configuration features a movable bristle carrier that is slightly elevated above the outer surface of the head such that the distal ends of the movable bristles are approximately at the same height as the longer static bristles extending from the outer surface of the head. Generally, by utilizing movable bristles that have a relatively short length, the distance or stroke of the movable bristle carrier (when undergoing a reciprocating motion) is less than if longer bristles were used. A shorter stroke generally leads to decreased power requirements. This is beneficial since battery demands are then reduced, which may further promote manufacturability and commercialability of the resulting toothbrush. Moreover, by utilizing relatively short length bristles for the movable bristles, and longer bristles for the static bristles, a greater proportion of the brushing load is assumed by the static bristles. This generally further reduces power demands on the motor and drive mechanism of the toothbrush.

Bristle stiffness is also a parameter that has been found to affect brushing efficacy, power requirements of the preferred toothbrushes described herein, and overall performance of the toothbrush. This parameter is particularly important to consider with regard to bristle length or height. For instance, for certain applications, it is preferable to utilize relatively stiff and short bristles on the movable brush head component in order to reduce the amount of travel by the brush head component.

The bristles, collectively, have a bristle stiffness which can be characterized numerically by the following equation:

$$\text{Bristle Stiffness} = \frac{D^2 E}{X^2} * \frac{N}{1 \times 10^6}$$

Where;

D=bristle diameter, in inches
E=modulus of elasticity of the bristle material when wet,
e.g. for nylon this is a constant, 460,000 psi
X=average bristle length across the head of the brush in inches
N=total number of bristles on brush head

The bristle stiffness for brushes of the present invention, as determined by the above equation, preferably ranges from about 0.2 to about 0.8. However, the present invention electric toothbrushes may utilize bristles having stiffness values outside of this preferred range.

The initial stiffness calculation,

$$\frac{D^2 E}{X^2}$$

for an individual bristle is a measure of the pressure produced by the minimum force-required to deflect a single bristle according to The Stiffness of Toothbrushes, D.W. MacFarlane, Brit. Dent. Jour., October 5, 1945. Bristle stiffness is obtained by multiplying this single bristle stiffness value by the total number of bristles on the brush head. The factor $1 \times 10^6$ used in the denominator of the foregoing equation is an arbitrarily selected constant which reduces the overall bristle stiffness value to reasonably small numbers for ease of comparison. A detailed discussion of bristle stiffness is presented in U.S. Patent 5,511,275.

It can be seen from the foregoing noted equation that generally, stiffness may be increased by increasing the number of bristles. Applying this equation to an individual tuft of bristles suggests that the stiffness of an individual tuft of bristles may be tailored by increasing or decreasing the number of bristles within that tuft, i.e. the tuft density. This technique can be used to readily provide a brush head bristle configuration having unique and selectively tailored brushing characteristics.

Another aspect of the preferred embodiment toothbrushes described herein relates to bristle or tuft density, and particularly, in combination with bristle size and material. Bristles for use herein can be made of any of the materials well known in the art. Suitable bristle materials herein include polyester and nylon, such as Dupont Tynex7 612 and Stylon7 612 from STP. Suitable types of nylon include, but are not limited to Nylon 6/6, Nylon 10/10, and Nylon 12/12.

The bristles are preferably of circular cross-section but can also be of other cross-sections including, but not limited to, rectangular, hexagonal and trilocular. Furthermore, the diameter and length of the bristles can vary within the usual dimensions known by a person skilled in the art. In preferred embodiments the bristles are of circular cross-section with a diameter of from 0.1 to 0.25 mm and length of from 7 to 15 mm, preferably 9 to 12 mm, with each tuft comprising from about 10 to about 50 bristles. The total number of bristles in the head portion of brushes of the present invention is preferably from about 1,200 to about 5,000, and even more preferably from about 1,600 to about 3,500. In such embodiments, each tuft is generally circular with a diameter of from about 1 to about 2 mm. It is also contemplated to utilize bristles and/or tufts of bristles having different diameters or spans together on a brush head.

Fastening of the bristle tufts to the brush head can be done using any of the methods known in the art, such as fusion, stapling and injection molding. Preferred processes herein are stapling and fusion. Each tuft has a base and a free end, the free ends of the tufts forming the working surface which is used to clean the teeth. As used herein, the "base" of the tuft is that part of the tuft at which it meets the face of the brush head or movable bristle carrier. It will be understood that a portion of the tuft extends below the base into the brush head or carrier, for the purpose of anchoring the tuft into the head or carrier. It is preferred for the head to comprise premolded tuft holes for the purpose of accommodating that portion of the tuft in this way. The tuft holes can be of any section including square and rectangular but are preferably circular. Their depth and diameter will be chosen by one ordinarily skilled in the art to suit the tufts to be inserted therein. Bristles inserted into a common tuft hole are considered to be fastened at a common point and to be part of the same tuft.

The length of the brush head is measured along the longitudinal axis of the toothbrush and generally from the distal end of the brush head to a location on the head just touching the tuft or row of tufts nearest the handle at the points of their base closest to the handle. Generally this brush head length is in the range from about 15 to about 35 mm, and preferably from about 20 to about 30 mm.

The length of the entire toothbrush is measured along the longitudinal axis of the toothbrush and generally from the distal end of the toothbrush head to the proximal end of the toothbrush handle, including the end cap. Generally this toothbrush length is greater than about 10 cm, about 12 cm, about 14 cm, about 16 cm, about 18 cm, and/or less than about 20 cm, about 22 cm, about 24 cm, about 26 cm.

It is most preferred that the bristle or tuft density on the movable bristle carrier is higher than the bristle density of the groups or regions of static bristles.

The present invention also provides several particularly preferred configurations of static bristles. The preferred configurations utilize a specific number of rows in designated regions of the brush head. These preferred configurations have been found to provide reduced load and wear on bristles that are disposed within the interior of the brush head, and particularly, the bristles that are supported on and by a movable bristle carrier. Fig. **14** illustrates a preferred configuration for a group of static bristles disposed on a brush head **1020** of a toothbrush **1000.** In this particular configuration, at least a single row of bristles encircle or substantially encircle the interior region of the brush head, i.e. the location in which the movable brush head is disposed. Specifically, the various preferred configurations for the static bristles **1060** may be conveniently described by referring to various regions of the brush head as sectors, and describing the preferred arrangements of static bristles in each of those sectors. Fig. **14** illustrates a brush head **1020** having a centrally located sector **C** (within which a movable bristle carrier resides), that is surrounded by sectors **D, E, F,** and **G.** Sectors **D** and **E** are defined along the lateral and opposite sides of the brush head. Specifically, sector **D** is located between a first side **1031** of the brush head and sector **C.** Sector **E** is located between a second side **1033** of the brush head and sector **C.** Sector **F** is located between the first and second sides **1031** and **1033** of the brush head **1020,** and a distal-most tip or end **1022** of the brush head **1020** and sector **C.** Sector **G** is defined between the first and second sides **1031** and **1033** of the brush head **1020,** and the sector **C** and a neck **1040.** Each sector in which static bristles may be located, may contain a certain number of rows of static bristles as follows. Before addressing the number of rows each sector preferably contains, it is instructive to define what is meant by a "row" of static bristles. A row of bristles is defined herein as an array or grouping of bristles that extends generally along a line or in a certain direction. Rows in sector **D** preferably extend in a direction that is generally parallel with the side **1031.** Similarly, rows in sector **E** preferably extend in a direction that is generally parallel with the side **1033.** Rows in sector **F** may extend in several fashions as follows. Rows in sector **F** may extend along an arc or other curved line generally following the curvature of sides **1031** and **1033** as the sides approach the distal end **1022** of the brush head **1020.** Alternatively, rows in sector **F** may extend in a direction that is generally perpendicular to the longitudinal axis of the brush head **1020** and the neck **1040.** This latter preferred configuration of rows is depicted in Fig. **14.** Rows in sector **G** may extend along an arc or other curved line; such as extending along a line following the outer periphery of sector **C.** Alternatively, rows in sector G may extend in a direction that is generally perpendicular to the longitudinal axis of the brush head **1020** and the neck **1040.** This latter preferred configuration of rows in sector **G** is depicted in Fig. **14,** and such rows are preferably parallel to the rows in sector **F.**

The preferred number of rows of static bristles in sectors **D, E, F,** and **G** ranges from 0 to 4 or more. However, certain preferred combinations of rows are particularly preferred in accordance with the present invention. These particularly preferred combinations are set forth in Table 1:

TABLE 1

| Preferred Configurations for Rows of Static Bristles | | | | |
|---|---|---|---|---|
| Bristle Configuration Identifier | Number of Rows in Sector | | | |
| | D | E | F | G |
| a. | 1 | 1 | 1-3 | 1 |
| b. | 1 | 1 | 1-3 | 2 |
| c. | 2 | 2 | 1-3 | 1 |
| d. | 2 | 2 | 1-3 | 2 |
| e. | 0 | 0 | 1-3 | 1 |
| f. | 0 | 0 | 1-3 | 2 |
| g. | 1 | 1 | 0 | 0 |
| h. | 2 | 2 | 0 | 0 |

Fig. **13,** as previously noted, illustrates a preferred configuration for the static and movable bristles. In this configuration, rows of static bristles are located along opposing sides of the movable bristle carrier. Within each row are groups or tufts of bristles. Preferably, the number of rows of bristles along each side of the bristle carrier ranges from 1 to 6. Most preferably, the number of rows on each side of the movable bristle carrier is either 1 or 2-6.

Fig. **15** illustrates one of the preferred static bristle configurations noted in Table 1 (bristle configuration identifier a). Specifically, Fig. **15** depicts a brush head **1120** of a toothbrush **1100** having a plurality of static bristles **1160** arranged in a predetermined number and combination of rows. It will be appreciated that although the rows depicted in Fig.15 are shown as generally straight or linear, particularly in sectors **F** and **G,** the rows may follow the shape or curvature of the outer periphery of the brush head **1120** such as extending along a portion of the sides **1131** and **1133.**

Within each sector of tufts, the distance between the bases of neighboring tufts is less than 1.3 mm, preferably from 0.6 to 1.2 mm, and more preferably from 0.8 to 1.1 mm. Distances between the bases of the tufts, as referred to herein are measured from tuft edge to tuft edge along a straight line drawn between tuft centers along the bristle-bearing face. Distances between the free ends of the tufts, as referred to herein, are measured from tuft edge to tuft edge along a straight line drawn between tuft centers, parallel to the bristle-bearing surface, from the free end of the shorter tuft. Unless specifically defined otherwise, distances between tufts refer to distances between neighboring tufts. By "neighboring tuft" is meant the closest nearby tuft.

The distance between the bases of neighboring tufts in adjacent groups, that is, measured across the gap between groups, is in the range from about 1.3 mm to about 5 mm, preferably from about 1.5 to about 3.5 mm, more preferably from about 1.7 to about 3 mm. There can be some variation across individual pairs of tufts but all pairs, where the members of each pair are in different groups will be at least 1.3 mm apart at their bases.

By having a relatively large distance between tufts in adjacent groups, the groups of tufts are able to operate independently of each other. That is, tufts from one group do not substantially obstruct tufts from an adjacent group. This allows tufts on the margins of the groups, in particular, to penetrate better into the interproximal gaps and other crevices. Nevertheless, a relatively high, overall density of tufts on the brush head is maintained by the relatively small distance between tufts within groups. This, in particular, provides for good bristle coverage on individual tooth surfaces.

Additional aspects and parameters of bristles and tufts are described in U.S. Patent 6,314,605.

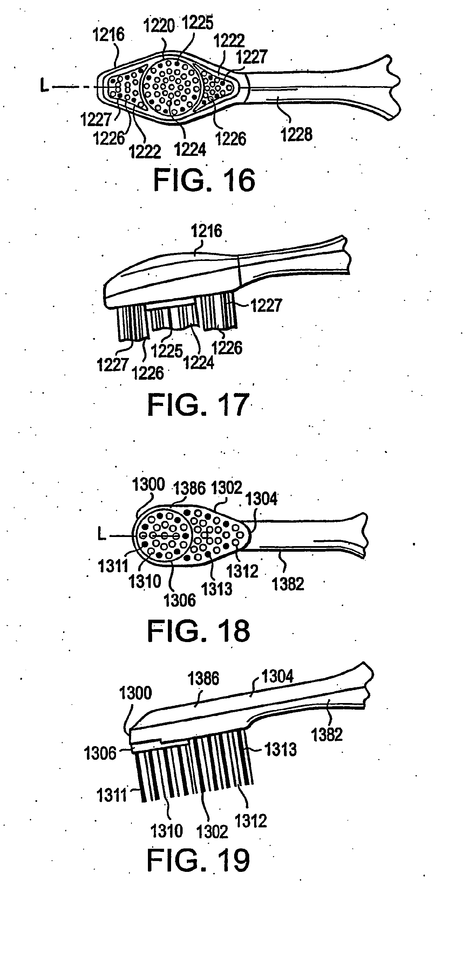

Another embodiment of the present invention is shown in Figs. **16** and **17,** which utilizes one or more elastomeric elements. The head of an electric toothbrush as described herein is illustrated. The remaining portion of the brush, including the handle, motor, etc. is the same as described for any of the previously described embodiments. As shown in Fig. **16,** a head **1216** includes a longitudinal axis **L,** a circular or moving portion or brush head **1220** and a static portion or region **1222.** The head **1216** is located adjacent a first end **1228** of an elongated body portion. The static portion or portions **1222** is located on opposite sides of the moving portion **1220.** The moving portion **1220** is located at the center of the brush head **1216.** The circular portion **1220** rotates, swivels, oscillates or reciprocates about an axis approximately normal to the longitudinal axis L of the brush head. The circular portion **1220** may rotate 360 degrees or partially rotate or oscillate or reciprocate in a back and forth manner.

The moving portion **1220** includes bristles **1224** and elastomeric elements **1225.** The static portion **1222** includes bristles **1226** and elastomeric elements **1227.** The elastomeric elements **1225, 1227** massage the gums while the user simultaneously brushes his or her teeth. The elastomeric elements **1225, 1227** can be made from a rubber, soft plastic or similar material. The elastomeric elements are preferably formed from an elastomeric material. The elastomeric elements **1225, 1227** extend essentially perpendicularly from the head **1216** as measured along the longitudinal axis **L.** In the preferred embodiment the elastomeric elements **1225, 1227** are located around the perimeter of the circular portion **1220** and the static portion **1222,** however it is to be understood that the elastomeric elements can be located anywhere among the bristles of the moving portion **1220** and the static portion **1222.** The length of the elastomeric elements **1225, 1227** is approximately the same length as the bristles **1224, 1226.** The elastomeric elements **1225, 1227** may extend slightly above, slightly below or to the same height as the bristles **1224, 1226.**

In a further preferred embodiment of the electric toothbrush having elastomeric elements as shown in Figs. **18** and **19,** a head **1386** includes a longitudinal axis **L,** a circular or moving portion or brush head **1306,** a static portion of brush head **1302,** a first end **1304** and a second end **1300.** The first end **1304** is located adjacent to the first end **1382** of the elongated body. The second end **1300** is located opposite the first end **1304.** The moving portion **1306** is preferably located at the second end **1300** of the brush head **1386.** The static portion **1302** is preferably located at the first end **1304** of the brush head **1386** adjacent to the moving portion **1306.** However, it is to be appreciated that the moving portion **1306** and the static portion **1302** can be arranged in different orientations. The moving portion **1306** can rotate, swivel, oscillate or reciprocate about an axis approximately normal to the longitudinal axis L of the brush head **1386.**

The moving portion **1306** includes bristles **1310** and elastomeric elements **1311.** The static portion **1302** includes bristles **1312** and elastomeric elements **1313.** The elastomeric elements **1311, 1313** massage the gums while the user brushes his or her teeth. The elastomeric elements **1311, 1313** can be made from a rubber, soft plastic or similar material. The elastomeric elements are preferably formed from an elastomeric material. The elastomeric elements **1311, 1313** extend essentially perpendicularly from the head **1386** as measured along the longitudinal axis **L.** In the preferred embodiment the elastomeric elements **1311,1313** are located around the perimeter of the moving portion **1306** and the static portion **1302,** however it is to be understood that the elastomeric elements can be located anywhere among the bristles of the moving portion **1306** and the static portion **1302.** The length of the elastomeric elements **1311,1313** is approximately the same length as the bristles **1310, 1312.** The elastomeric elements **1311, 1313** may extend slightly above, slightly below or to the same height as the bristles **1310,1312.**

The present invention is also based upon a unique design for a unitary body or housing for an electric toothbrush that incorporates an integral neck and brush head assembly. The one-piece body or housing greatly simplifies assembly of the toothbrush and reduces manufacturing costs associated with the brush. The present invention also provides a novel modular design for the brush head that enables a wide array of bristle sets to be used in conjunction with the toothbrush.

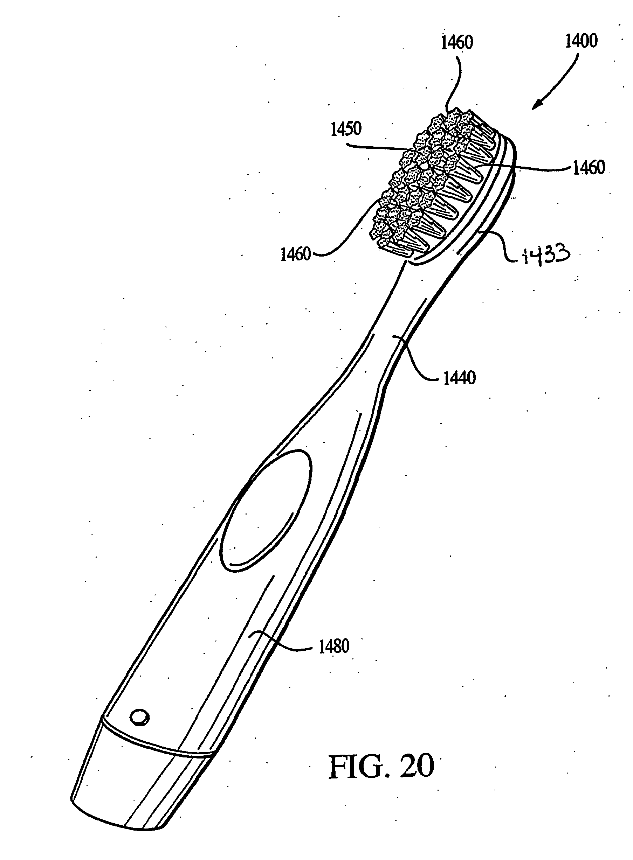

Referring to Fig. **20,** one embodiment of the toothbrush **1400** is illustrated. The toothbrush **1400** comprises a body **1480,** a head **1433** and an intermediate portion or neck **1440** extending between, and integrally formed with, the body **1480** and the head **1433.** Movably retained on the head **1433** are a collection of bristles **1450** which are supported on a movable bristle carrier described in greater detail herein. Also disposed on the head **1433** are a collection of static bristles **1460.** Preferably, the static bristles **1460** extend around the periphery of the head **1433.** The static bristles **1460** are supported and retained by the head of the toothbrush **1433** are described and illustrated in greater detail herein.

Fig. **21** is a partial exploded view of an embodiment of the toothbrush **1400** shown in Fig. **20.** Fig. **21** illustrates an assembly and configuration of components utilized in the toothbrush **1400** wherein the separate static and movable bristle carriers independently engage the receiving member to form the head of the toothbrush. The static and movable bristle carriers can engage the receiving member independently in either the same channel or within separate channels. Fig. **21** illustrates the toothbrush **1400** which further comprises an end cap or base **1482** which snaps on or is otherwise releasably secured to the end of the body **1480.** The end cap or base 1482 may be provided in a variety of different shapes and configurations including, but not limited to, round, oval, square, and/or rectangular. The body **1480** also includes a region adapted for retaining a switch or other actuator assembly **1486** for controlling operation of a motor, battery, and drive train or mechanism (not shown) preferably disposed in the body **1480** of the toothbrush **1400.** This switch region is illustrated in Fig. **21** as region **1484.** The switch or actuator **1486** is received and retained at region **1484.** The body **1480** provides a hollow interior cavity or chamber in which is disposed the motor and drive mechanism. Upon operation, the drive mechanism preferably provides a drive shaft that reciprocates in a direction generally parallel to the longitudinal axis of the toothbrush **1400.** Referring to the receiving member **1420** of the toothbrush **1400** in Fig. **21,** it will be noted that the receiving member is shown without any bristles **1450,1460** (as shown in Fig. **20).** This is to more clearly illustrate assembly of the toothbrush **1400.** It can be seen that one face of the receiving member **1420** is configured so as to include a generally flat surface **1422** which defines a plurality of mounting locations or apertures **1424** for the static bristles **1460.** Preferably this flat region **1422** and its plurality of apertures **1424** extend about the outer periphery of the receiving member **1420** as shown in Fig. **21.** Most preferably, this flat region **22** extends in a U-shape as shown in Fig. **21.** Defined along the interior or medial region of the receiving member **1420** is a receiving surface or channel **1425** generally extending between two inwardly facing receiving surfaces or channels **1426** and **1427.** These channels are generally in pairs and are defined by surfaces **1425, 1426,** and 1427 are generally sized so as to receive components **1452** and **1430** as follows.

The embodiment of the toothbrush **1400** comprises a movable bristle carrier **1452** which, upon engagement with the receiving member, is retained along the receiving member **1420** and preferably within a pair of channel defined by surfaces **1425, 1426,** and **1427** of the receiving member. Movable bristle carriers **1452** defines a plurality of apertures **1454** as shown in Fig. **21.** The bristle carriers **1452** also defines an aperture **1453** that is sized and adapted to receive a pin or other member for engagement with the drive mechanism (not shown) disposed in the body **1480** and neck **1440** of the toothbrush **1400.** The present invention includes other engagements between the movable bristle carriers **1452** and a drive shaft, such as but not limited to, a snap type engagement. The toothbrush **1400** further comprises a static carrier, such as brush head tip **1430** which, after assembly of the movable bristle carriers **1452** on the head **1433,** may also be received and secured along the head **1433.** The brush head tip **1430** also defines a plurality of apertures **1434** adapted for retaining a plurality of static bristles **1460** as shown in Fig. **20.**

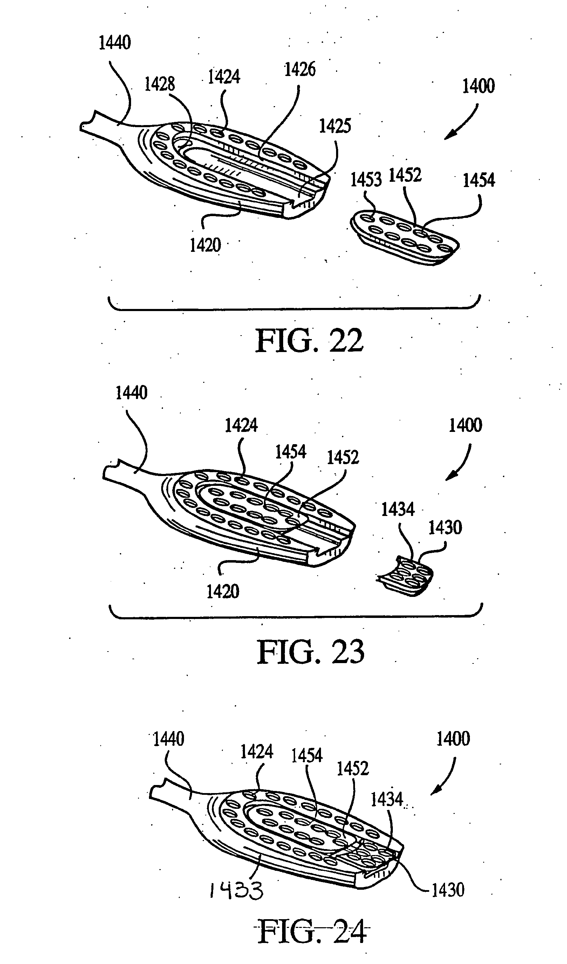

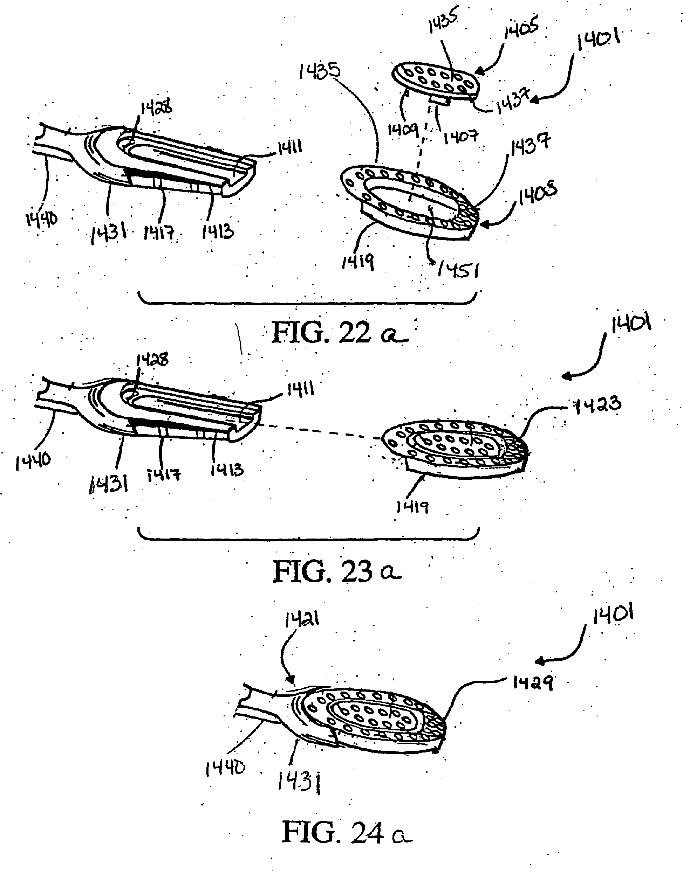

Figs. **22** to **24** illustrate a sequence of assembly of the movable bristle carriers **1452** and the brush head tip **1430** with the receiving member **1420** to form the head **1433** of the embodiment of the toothbrush **1400.** Specifically, Fig. **22** illustrates the receiving member **1420** and neck **1440** of the embodiment of the toothbrush **1400.** The receiving member **1420** is oriented to receive the movable bristle carriers **1452.** Specifically, the bristle carriers **1452** can preferably slidingly engage the toothbrush head within the channel defined by the surfaces **1425, 1426,** and **1427** in the receiving member **1420.** The head of the toothbrush **1433** includes a passage **1428.** The passage **1428** provides access between the head **1433** of the toothbrush and the interior of the body **1480** and neck **1440.** This passage **1428** can be adapted to enclose and retain a shaft or other component of a drive mechanism. The distal end of the drive shaft (not shown) can be secured to the movable bristle carriers **1452** such as by attachment at aperture **1453** of the carriers **1452.** Accordingly, the bristle carriers **1452** can be oriented within the pairs of channels defined on the receiving member **1420** such that the aperture **1453** is proximate the passage **1428.** As previously noted, a snap-fit connection may be utilized between the bristle carriers **1452** and the distal end of the **drive** shaft.

Fig. **23** illustrates the movable bristle carriers **1452** slidingly engaged within the head **1433** of the embodiment of the brush **1400.** After engagement of the movable bristle carriers **1452** to the receiving member **1420,** the brush head tip **1430** may be secured along the distal end of the receiving member **1420.** The brush head tip **1430** preferably is also slidingly engaged within the receiving member **1420,** and specifically within the channel defined by the surfaces **1425, 1426,** and **1427.** One or more retaining grooves or channels are preferably defined along the outer surfaces of either the tip **1430** or the channel defined by the surfaces **1425,1426,** and **1427** within which outwardly extending projections defined on an opposing surface, reside to secure the tip **1430** within the receiving member **1420.** A wide array of channel configurations may be utilized in accordance with the present invention. Although a channel and corresponding channel components are used to assist in retaining the movable bristle carriers to the brush head, it is contemplated that other retaining assemblies or configurations may be utilized. As previously noted, the present invention toothbrushes are not limited to a particular motion or direction of motion for the movable bristle carriers.

Fig. **24** illustrates final assembly of the tip **1430** along the distal end of the receiving member **1420.** It will be appreciated that the various components noted in these figures, would include the bristles **1450,1460.** The bristles have been omitted from these figures to more clearly illustrate assembly of the primary components of the toothbrush **1400** and specifically along the receiving member **1420** and the toothbrush head **1433.** It will be further appreciated that the brush head tip may be formed in a variety of shapes and configurations. It may in some instances, be preferred to provide a brush head tip having an arcuate or U shape. Or, the tip may be formed so as to constitute a relatively large portion of the brush head. Or, the arcuate or U shape may substantially surround the movable bristle carriers.

Fig. **21a** is a partially exploded view of another embodiment of the toothbrush made according to the present invention. Fig. **21a** illustrates an assembly and configuration of components utilized in the embodiment of the toothbrush **1401.** It can be seen that the head of the toothbrush comprises a receiving member, and bristle carriers. The plurality of bristle carriers are shown without bristles to more clearly illustrate the assembly of the toothbrush **1401. Fig. 22a** shows that one face of the bristle carriers is configured so as to include a generally flat surface **1435** which defines a plurality of mounting locations or apertures **1437** for the bristles to be inserted. The receiving member **1431** as shown in **Figs. 21a - 24a** of the toothbrush is an extension from the neck, which provides surfaces that the bristle carriers can engage.

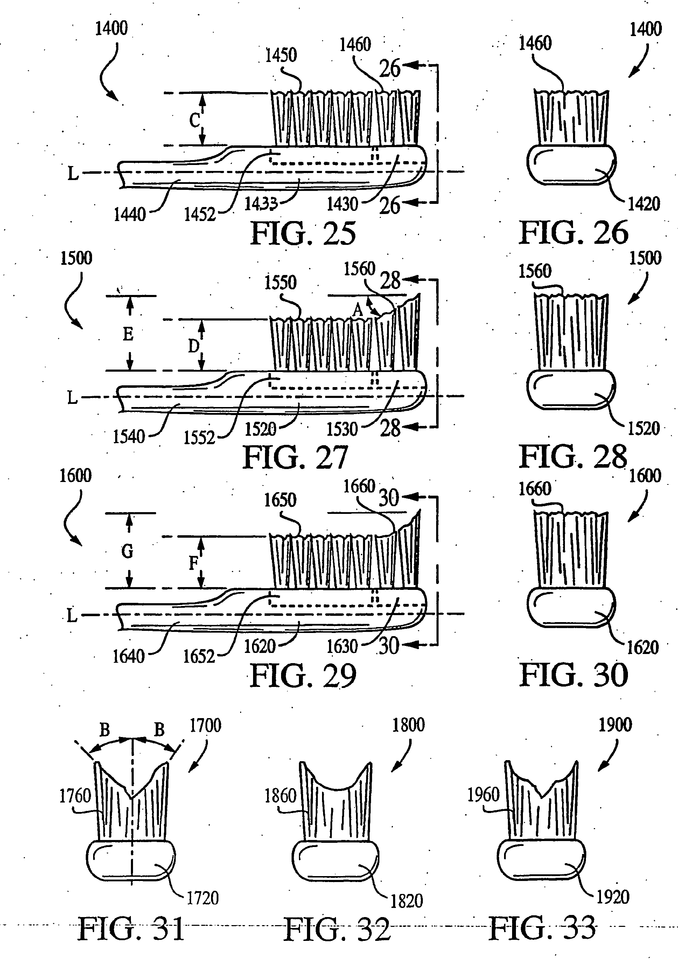

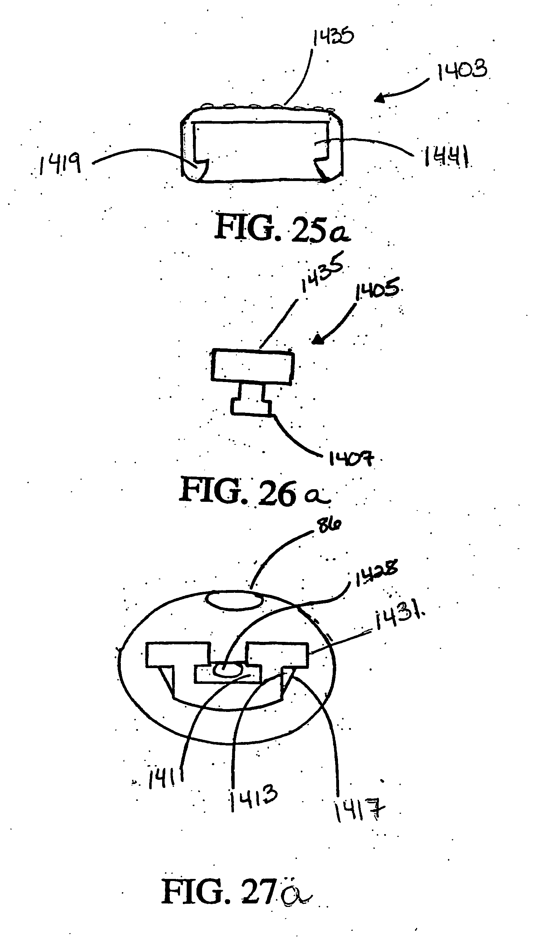

In this embodiment of the toothbrush the head comprises the receiving member **1431** the movable bristle carrier **1405** and the static bristle carrier **1403.** The receiving member **1431** is configured so as to include a generally flat surface **1439** shown in Fig. **21a.** This generally flat region preferably contains guiding elements, which engage and retain the bristle carriers. Examples of guiding elements include, but are not limited to pairs of channels **1411** and **1413** as shown in **Figs. 21a** and 27a, and rails **1407** and **1419** as shown in **Figs. 25a** and **26a.** The static bristle carriers and the movable bristle carriers can independently, slidingly engage the pairs of channels **1411** and **1413** with rails 1407and **1419** respectively. While the static and movable bristle carriers are illustrated herein as independently engaging separate channels it is contemplated that the static and movable bristle carriers can independently engage the same channel(a). The channels are defined by the surface of the receiving member **1431** and are generally sized so as to receive rails **1407** and **1419,** as shown in Figs. **22a** to **24a.** Also, in another embodiment of the toothbrush, the brush head comprises areas to snap (not shown) or otherwise removably attach the movable **1405** and static bristle carriers **1403.**

The embodiment of the toothbrush **1401** comprises one or more movable bristle carrier(s) **1405** which engage the receiving member **1431,** preferably within a pair of channels **1411** defined by the surfaces of the receiving member. The surfaces of the movable bristle carriers can serve as a guide to direct and engage the movable bristle carriers within the channels defined by the surfaces of the receiving member **1411.** Preferably these guides are rails **1407** sized to fit the channels **1411.** The guide can be any shape sized to fit the channels defined by the surfaces of the receiving member, including but not limited to I-shaped, T-shaped, C-shaped, and/or U-shaped. The guide shown in **Fig. 26a** is a T-shaped **rail 1407.** Preferably, the movable bristles are substantially encircled by static bristles disposed on the static bristle carrier **1403.** To form this preferred toothbrush head the one or more static bristle carrier(s) **1405** engage the receiving member, preferably within a pair of channels **1413.** The surfaces of the static bristle carriers can comprise guides such as rails **1419** sized to fit the pair of channels **1413.** Rails **1419** direct and engage the static bristle carriers within the pair of channels **1413** to form the head of the toothbrush. Additionally, the engagement of the static and/or movable bristle carriers to the receiving member to form the head of the toothbrush can be releasably removable so that the bristle carriers can be replaced or exchanged for new or different bristle carriers.

In the embodiment shown in **Figs. 21a - 27a** the head of the toothbrush can be formed by the bristle carriers engaging the receiving member within pairs of channels such as pair **1411** and pair **1413** defined by the surfaces of the receiving member **1431** which extends from the toothbrush neck. The receiving member is devoid of bristles prior to the engagement of the bristle carriers. The static **1403** and movable **1405** bristle carriers independently, slidingly engage the receiving member within separate channels, while in a nested arrangement. This nesting arrangement can be formed by the capturing of the movable bristle carrier within the aperture of the static bristle carrier **1451 (Figs. 22a - 24a).** Preferably the static bristles substantially encircle the movable bristles. Although the bristle carriers are in a nested arrangement **1423,** the bristle carriers remain separate, **as** the bristle carriers lack permanent association with each other. In one embodiment the nesting arrangement **1423** is achieved by slidingly engaging the one or more movable bristle carrier(s) within an aperture **1451** of the one or more static bristle carrier(s), and then slidingly engaging the nested bristle carriers with the receiving member extending from the neck of the toothbrush **(Figs. 22a - 24a).** Although the bristle carriers engage the receiving member simultaneously, the movable and static bristle carriers engage the receiving member independently of each other. The head of this embodiment of the toothbrush is formed once the bristle carriers, in a nested arrangements, engage the receiving member **(Fig. 23a).** This independent engagement (shown in **Figs. 22a - 27a)** is achieved by the static bristle carrier engaging the receiving member within pair of channels **1413** defined by the surfaces of the receiving member via rail **1419** defined by the surfaces of the static bristle carrier **1403** and the movable bristle carrier engaging the receiving member within pair of channels **1411** defined by the surfaces of the receiving member via rail **1407** defined by the surfaces of the movable bristle carrier **1405.** It remains possible to separate the nested bristle carriers pieces until connected to the receiving member, because of the lack of permanent association. This facilitates the reciprocating movement of the movable bristle carriers, when the movable bristle carriers are operatively connected to the drive shaft **3205.** This nesting arrangement allows the movable bristle carriers to be substantially encircled by static bristles, but remain movable upon operation of the toothbrush. More than one movable bristle carrier can be nested within the static bristle carriers. Additionally, more than one static bristle carrier can be used to substantially encircle the movable bristle carriers. Each bristle carriers can engage the receiving member of the toothbrush in a separate channel, or more than one bristle carriers can engage the receiving member within the same channel. Fig. **24a** illustrates the movable and static bristle carriers slidingly engaged with the receiving member of this embodiment of the toothbrush **1401.** The movable and static bristle carriers may engage the receiving member in the same channel. In another embodiment the movable and static bristle carriers snap onto the receiving member. The movable bristle carriers can be retained on the receiving member by an operative engagement with the drive shaft. Preferably both the static bristle carriers and the movable bristle carriers can engage the receiving member in a longitudinal direction. However, the carriers can also engage the receiving member in a direction perpendicular to the surface of the receiving member.

A wide array of channel configurations can be used to slidingly engage the nested bristle carriers **1423** with the receiving member **1431** of the toothbrush **1401.** These channels should be sized as necessary to direct and/or guide a rail, or other guiding member, located on the bristle carriers. The channels can be various shapes and sizes other than what is shown. Additionally, the channels can be three sided, two sided, or even one sided, so long as the channel is sized to receive or guide the rail, or other guiding member located on the bristle carriers. The receiving member can comprise as many channels as bristle carriers to be engaged. The channels may be configured such that the movable bristle carriers engages an inner set of channels, defined by the surfaces located towards the center of the receiving member, and an outer set of channels, defined by the surfaces located towards the outward edges of the receiving member. Each bristle carriers can have an individual channel, or the bristle carriers can engage the receiving member in the same channel. In the alternative the surface of the receiving member can be formed into a rail to guide the bristle carriers into place. In addition to the channel and rail assembly used to guide the bristle carriers onto the receiving member, other assemblies may be used to retain the bristle carriers on the receiving member. In one embodiment the bristle carriers are retained on the receiving member of the toothbrush by connectors defined by the outer surface of the receiving member, matable with connectors defined by the inner surface of the static bristle carriers. Such connectors include, but are not limited to, serrations and teeth, indentations and tabs, and grooves and protuberances. In one embodiment of the toothbrush the connectors are one or more retaining grooves defined along the inner surfaces of the static bristle carriers, and protuberances defined along the outer surface of the receiving member **1417** wherein the protuberances reside in the grooves to secure the static bristle carriers on the receiving member. In another embodiment, (not shown), the protuberances are defined along the inner surface of the static bristle carriers, and the grooves are defined along the outer surface of the receiving member, wherein the protuberances reside in the grooves to secure the static bristle carriers. The bristle carriers can also engage the receiving member with a snap type engagement (not shown). In another embodiment the one or more static carrier(s) and/or the one or more movable carrier(s) engage the receiving member with a flexible tongue having a latch hook and a corresponding locking undercut or recess in the opposite attachment part as disclosed in U.S. Application 10/361,653.

When the one or more movable bristle carrier(s) are nested within the static bristle carrier(s), the rail of the movable bristle carrier(s) can extend below the static bristle carrier(s), so that the rail of the movable bristle carrier(s) can engage the receiving member of the toothbrush. When the nested bristle carrier(s) engage the receiving member, the movable bristle carrier(s) can be disposed in the middle and/or center of the head of the toothbrush.

In another embodiment the nested arrangement occurs only once all the bristle carriers engage the receiving member (not shown). In this embodiment a portion of the receiving member comprises static bristles permanently affixed directly onto the surface of the receiving member. The movable bristle carrier(s) can be substantially surrounded by static bristles when a receiving member provided with bristles, receives one or more movable bristle carrier(s) and then one or more static bristle carrier(s).

The movable bristle carrier(s) is also operatively engaged to the motor. This operative engagement can be achieved by connecting the bristle carrier(s) to a drive shaft that extends through a passage **1428** defined within a portion of the neck **1440** and receiving member **1431.** The drive shaft may be rotatably or slidingly disposed within the passage **1428.** Once the brush head is formed by the engagement of the bristle carriers to the receiving member, the passage **1428** provides access between the brush head **1421,** the neck **1440,** and the interior of the body **1480.** The distal end of the drive shaft is preferably secured to the movable bristle carrier(s) by the pin **1409,** located on the movable bristle carrier(s) **1405,** engaging the aperture, located on the tip of the drive shaft (not shown). The tip of the shaft may be flexible, and deflects to facilitate receiving the pin on the movable bristle carrier(s) into the aperture on the tip of the drive shaft. The present invention includes engagement assemblies using pins, protuberances or other fasteners that affix the drive shaft to the movable bristle carrier(s). A snap-fit connection may be utilized between the movable bristle carrier (s) and the distal end of the drive shaft. Examples of snap fit connections include, but are not limited to, serrations on teeth, and a press fit engagement. The present invention also includes all types of motors and gearing arrangements suitable for operating an electric toothbrush, including but not limited to the inventive high efficiency motor discussed herein. These motors can move the drive shaft. The operative connection between the drive shaft and the movable carrier(s) facilitates movement of the movable carriers. The drive shaft, and therefore the movable carrier(s), can undergo any of the aforementioned motions. However, in one embodiment the drive shaft and the movable carrier(s) reciprocates.

It will be understood that the present invention includes assemblies featuring a releasably removable static carrier(s) such as a brush head tip, similar to tip **1430** shown in the noted figures, and/or a releasably removable movable carrier(s). A removable static carrier(s), and/or movable carrier(s) enables a user to selectively tailor and customize a brush as desired. For example, various combinations of static and/or movable carriers include, but are not limited to, bristle carriers, brush head tip carriers, elastomeric element carriers, oral care composition carriers, and dental tool carriers, or any combination thereof. For instance, carriers containing elements that are specifically designed for applying whitening agents to the teeth may be used. It is also contemplated that elastomeric elements or "cushioning" elements may be provided and/or used with the present invention toothbrushes. Such elastomeric elements are formed entirely or partially from thermoplastic elastomers. Elastomeric elements are particularly preferred for incorporation in toothbrushes that utilize one or more other regions or components that are formed from elastomers. For example, the present invention includes toothbrushes as described herein with elastomeric elements and which employ one or more elastomers in gripping regions along the handle, or as "bumpers" or cushioning regions along the brush head. Such elastomers may be co-injected when forming the brush, or may be coated thereon.

The releasable aspect of the carrier(s) may be provided by incorporating a release member along the underside of the brush head that, when pressed or otherwise engaged, allows the carrier to be removed and another carrier positioned in its place. It is further envisioned that the releasable aspect could be achieved by use of a tool or other component to selectively release the carrier from the receiving member. Such a tool could be sold or otherwise commercialized with the toothbrush. Alternatively or in addition, such a tool could be sold or otherwise commercialized with one or more carriers that are sold as a kit for use with the present invention toothbrushes. More specifically, such kits might include one or more of the following and thus incorporate a combination of any of the following components: (i) bristle carriers, brush head tips, elastomeric element carriers, oral care composition carriers, and dental tool carriers, (ii) one or more toothbrushes, (iii) a package or other housing for storing all the components, (iv) one or more tools that might be useful when replacing or substituting or otherwise changing carrier(s), and (v) one or more dentifrice or other compositions for use with the carrier(s) and toothbrush. It is further envisioned that such kits may include batteries for use with the toothbrush, bases or other "stands" for retaining the toothbrush when not in use, replaceable handle components that are used to change the appearance of the toothbrush, and decorative stickers or other types of labels that may be placed on the toothbrush, its stand, and/or the kit housing.

Figs. **25a** through **27a** further illustrate embodiments of the static bristle carriers Fig. **25a,** the movable bristle carriers Fig. **26a,** and the receiving member Fig. **27a** Fig. **25a** illustrates an end view of the rails **1419** defined by the surfaces of the static carriers **1403.** This embodiment of the invention also has apertures **1435** to receive bristles. Additionally, this embodiment has a cavity **1441** where the receiving member **1431** engages the static carriers. **Fig. 26a** illustrates an end view of the movable carriers **1405,** as well as the rails **1407** defined by the surfaces of the movable carriers. Fig. **27a** illustrates an end view of the inventive toothbrush, and in particular the receiving member **1431.** The static carriers **1403** engages the receiving member via the channels **1413.** The movable carriers **1405** engages the receiving member via the channels **1411.** The static carriers can be retained on the receiving member by the protuberance **1417,** received into a groove on the inner surface of the static carriers **1403.**

A wide array of bristle configurations may be utilized in conjunction with the toothbrushes of the present invention, and particularly those embodiments that utilize a removable or separately formed brush head tip. For instance, static bristles having a height or length that is equal to that of the movable bristles may be utilized. Any of the previously noted configurations of the static bristles and movable bristles shown in the referenced figures, described herein, or noted in Table 1 may be utilized. Specifically, Figs. **25** and **26** illustrate the head of the toothbrush **1433** and the neck **1440** of one embodiment of the brush **1400** with a collection of static bristles **1460** disposed on a tip **1430** at the distal end of the toothbrush head **1433** and a collection of movable bristles 1450 disposed on a movable bristle carriers **1452** (the carriers **1452** shown in dashed lines). Preferably, the height of the movable bristles **1450** along the toothbrush head **1433,** designated in Fig. **25** as dimension **C,** ranges from about 3 mm to about 14 mm, and preferably from about 7 mm to about 11 mm. Generally, bristle height is the distance of a bristle as measured from an outwardly directed surface, i.e. typically the surface of its base or mounting component, to the end or tip of the bristle. The noted outwardly directed surface of a bristle mounting component is generally referred to herein as a brush-facing surface. Although not shown in Fig. **25,** it will be appreciated that a plurality of static bristles, supported and retained directly on the head of the toothbrush **1433,** are preferably disposed around the movable bristles **1450.** It will be appreciated that such static bristles are not shown in these figures (nor in Figs. **27-30)** for purposes of clarity. The preferred height of the static bristles (those disposed around the movable bristles **1450** and those disposed on the tip **1430)** also ranges from about 3 mm to about 14 mm, and preferably from about 7 mm to about 11 mm.

It is also contemplated to provide static bristles having a varying length, and particularly, arranged in a manner so as to provide an inclined brushing surface. This is shown in Figs. 27 to **33.** The term "brushing surface" as used herein refers to the distal ends of bristles or elastomeric that contact a user's teeth or gums during brushing.

Specifically, Figs. **27** and **28** illustrate a toothbrush head **1520** and a neck **1540** of another embodiment of the toothbrush **1500** according to the present invention. The brush head **1520** includes a movable bristle carriers 1552 having a plurality of movable bristles **1550** (the carriers **1552** shown in dashed lines) supported or retained therein. The brush head **1520** also includes a tip **1530** having a collection of static or stationary bristles **1560** supported or retained thereon. It will be appreciated that a plurality of stationary bristles **1560** preferably surround, or at least partially so, the movable bristles **1550.** For clarity, that portion of bristles supported directly on the brush head **1520** is not shown in Fig. **27.** The tip **1530** preferably includes stationary bristles **1560** having different lengths and arranged so as to provide an inclined brushing surface. When providing an inclined brushing surface, such as specifically shown in Fig. **27,** the angle **A,** which is the angle of the inclined surface with respect to the longitudinal axis of the neck **1540** and head **1520,** may range from about 5 degrees to about 85 degrees, and preferably from about 20 degrees to about 70 degrees. Most preferably, the longer bristles are disposed adjacent the distal end of the head **1520.** The height of the movable bristles **1550,** designated in Fig. **27** as dimension **D,** ranges from about 3 mm to about **14** mm, and preferably from about 7 mm to about 11 mm. The height of the static bristles **1560** ranges from about 3 mm to about 18 mm, and preferably from about 7 mm to about 11 mm. The maximum height of the static bristles **1560** and particularly those disposed at the distal end of the head **1520** is about 18 mm. That dimension is shown as dimension **E** in Fig. **27.**

Figs. **29** and **30** illustrate yet another preferred configuration for bristle configurations. These figures illustrate an embodiment of the toothbrush **1600** having a neck **1640,** a toothbrush head **1620,** a movable bristle carriers **1652** (shown in dashed lines) having movable bristles **1650,** a toothbrush head tip **1630,** and a collection of static bristles **1660** located on the end tip **1630** disposed at the end of the toothbrush head **1620.** In this embodiment, the collection of static bristles **1660** on the tip **1630** are arranged so as to provide an inclined brushing surface. The height of the movable bristles **1650,** designated in Fig. **29** as dimension **F,** ranges from about 3 mm to about 14 mm, and preferably from about 7 mm to about 11 mm. The height of the static bristles **1660,** ranges from about 3 mm to about 18 mm, and preferably from about 7 mm to about 11 mm. The maximum height of the static bristles **1660** and particularly those disposed at the distal end of the head **1620** is about 18 mm. That dimension is shown as dimension **G** in Fig. **29.** The embodiment illustrated in Figs. **29** and **30** differs from that depicted in Figs. **27** and **28** primarily in that the static bristles **1660** disposed on the brush head tip **1630** do not linearly vary in height from one end of the tip **230** to the other, as do the bristles **150** in Fig. **27**. Restated, the resulting surface defined by the distal ends of the bristles **150** in Fig. **27** is generally straight, whereas the resulting surface defined by the distal ends of the bristles **1660 in** Fig. **29** is generally arcuate.

It is also contemplated to utilize various bristle configurations at the toothbrush head tip which provide varying inclinations and changing bristle height across the width of the brush head as shown in Figs. **31** to **33**. Specifically, Fig. **31** illustrates an embodiment of the toothbrush **1700** having a brush head **1720** and a plurality of static bristles **1760**. The bristles **1760** provide an inclined brushing surface that forms an angled valley, when viewed along a line in the same direction as the longitudinal axis of the brush head **1720** and neck (not shown in Fig. **31).** Preferably, each side of the valley formed by the distal ends of the bristles **1760** is symmetrical and extends so as to form an angle **B** with respect to a vertical line perpendicular to a longitudinal axis of the brush head **1720** and neck (not shown). Angle **B** may range from about 10° to about 80°, and preferably from about 30° to about 60°

Fig. **32** illustrates another embodiment of the toothbrush **1800** having a brush head **1820** with a plurality of static bristles **1860** extending therefrom. The contoured or arcuate brushing surface provided by the distal ends of the bristles **1860** may be in the form of a concave region or surface as shown in Fig. **32.**

Fig. **33** illustrates another embodiment of the toothbrush **1900** having a brush head **1920** and a plurality of static bristles **1960** extending therefrom. The bristles **1960** may provide an irregular brushing surface as shown.

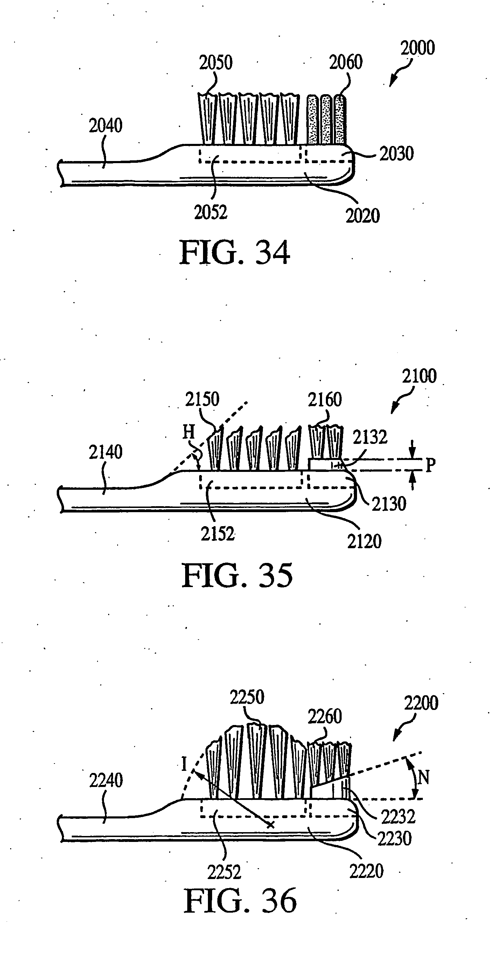

Fig. **34** illustrates a portion of another embodiment of the toothbrush **2000**. This toothbrush comprises a brush head **2020,** a neck or intermediate portion **2040,** a movable bristle carriers **2052** (shown in dashed lines), a brush head tip **2030** (shown in dashed lines), and a plurality of bristles **2050** and a plurality of elastomeric elements **2060**. The bristles **2050** may include movable bristles, static bristles, or both, as described herein. The elastomeric elements **2060** massage the gums while the user simultaneously brushes his or her teeth. The elastomeric elements can be made from a rubber, soft plastic or similar material. The **elastomeric** elements are preferably formed from an elastomeric material. The elastomeric elements extend essentially perpendicularly from the toothbrush head **2020** as measured along the longitudinal axis of the toothbrush **600.** In one of the embodiments of the toothbrush **2000,** the elastomeric elements **2060** are located proximate the distal end of the toothbrush head **2020,** and most preferably along the brush head tip **2030** as described herein. However, it is to be understood that the elastomeric elements can be located anywhere among the moving and static bristles. The height of the elastomeric elements **2060** is approximately the same height as the bristles **2050**. The elastomeric elements **2060** may extend slightly above, slightly below or to the same height as the bristles **2050.**

Fig. 35 illustrates another embodiment of the toothbrush **2100** comprising a toothbrush head **2120,** a movable bristle carriers **2152** (shown in dashed lines), and a neck or intermediate portion **2140**. The toothbrush **700** includes a plurality of bristles **2150** and a second set of bristles **2160** disposed on a brush head tip **2130** (shown partially in dashed lines). In this embodiment, the bristles **2150** are arranged in groups of tufts wherein each tuft contains bristles of various lengths or heights. The bristles of varying height are arranged within each tuft such that the distal ends of the bristles form an inclined surface with respect to the generally flat surface or brush-facing surface of the brush head **2120**. Preferably, this inclined surface forms an angle **H** with respect to the flat face of the brush head **2120**. Angle **H** is in the range of from about 10° to about 90° and preferably from about 20° to about 45°.

The second set of bristles **2160** disposed on the brush head tip **2130** are preferably also arranged in groups or tufts. The preferred height of bristles **2160** is approximately equal to the maximum bristle height of the bristles **2150**. Fig. **35** illustrates a particularly preferred feature of the present invention toothbrushes, and relating to the configuration of the brush head tip **2130**. The brush head tip **2130** is provided with a region **2132** having a relatively large thickness such that its flat, brush-facing surface generally extends above the brush-facing surface of the carriers **2152**. This difference in height between the brush-facing surfaces of the regions of bristles **2150** and bristles **2160** is illustrated in Fig. **35** as dimension **P.** Preferably, **P** is from about 1 to about 5 mm.

Fig. **36** is another illustration of an embodiment of the toothbrush **2200** having a head **2220,** a movable bristle carriers **2252** (shown in dashed lines), and a neck **2240**. Disposed on the brush head **2220** are a plurality of upwardly extending bristles **2250**. The toothbrush **2200** also includes a brush head tip **2230** (shown partially in dashed lines) disposed at the distal end of the brush and having a region **2232** that extends above the flat, brush-facing surface of the brush head **2220** and the carriers **2252**. The plurality of bristles **2250** are preferably configured such that their outermost ends, when viewed in planar fashion as shown in Fig. **36,** define an arcuate brushing surface, preferably having a common radius as shown in Fig. **36,** designated as **I**. The brush head tip **2230** includes the raised region **2232** that is preferably formed to define a sloping surface with respect to the flat, brush-facing surface of the brush head **2220** and the carriers **2252**. This angle of slope is shown in Fig. **36** as angle **N.** Angle **N** may range from about 10° to about 80°, with 15° to 45° being preferred. The height of the bristles **2260** may be greater or lesser than any of the heights of the bristles **2250**. The bristle configuration depicted in Fig. **36** is exemplary.

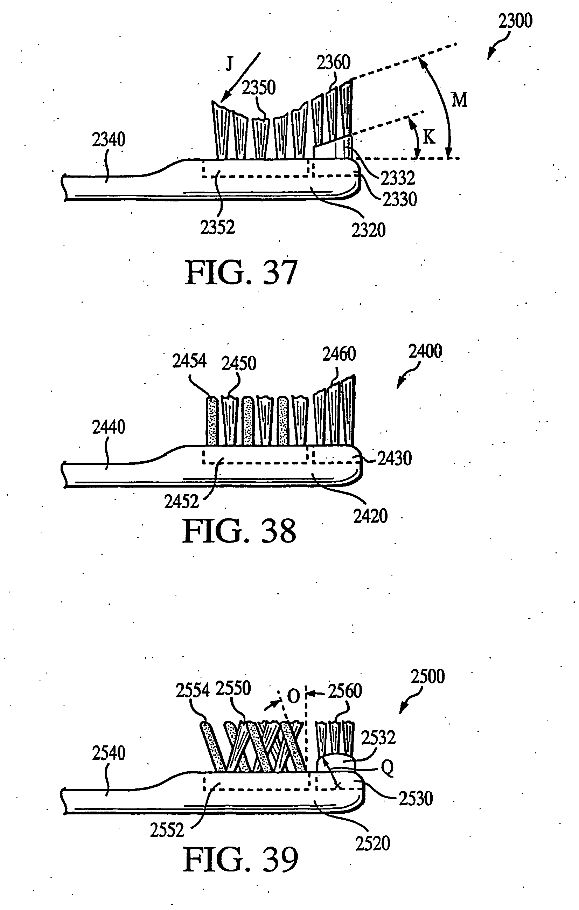

Fig. **37** illustrates another embodiment of the toothbrush **2300** according to the present invention. Toothbrush **2300** comprises a brush head **2320,** a movable bristle carriers **2352** (shown in dashed lines), and a neck **2340.** The toothbrush **2300** includes a plurality of bristles **2350** and another set of bristles **2360** disposed on a brush head tip **2330** (partially shown in dashed lines). The brush head tip includes a raised region **2332** extending above the brush-facing surface of the brush head **2320** and carriers **2352.** The outermost surface of the raised region **2332** of the brush head tip **2330** is preferably sloped at an angle **K** as shown in Fig. **37.** Angle **K** may range from about 10° to about 80°, with 15° to 45° being preferred. The bristles **2350** are also particularly configured such that their outermost or distal ends define a concave brushing surface, preferably having a common radius J as shown in Fig. 37. The height of the bristles **2360** may be greater or lesser than any of the heights of the bristles **950.** However, it may in some applications be preferred to arrange the bristles **2360** such that their distal ends generally extend within a plane that is parallel with the sloping surface of the raised region **2332** of the brush head tip **2330.** This angle **M** preferably corresponds to angle **K**, and so may range from about 10° to about 80° with 15° to 45° being preferred.

Fig. **38** is another embodiment of the toothbrush **2400** having a brush head **2420,** a movable bristle carriers **2452** (shown in dashed lines), a brush head tip **2430** (also shown in dashed lines), and a neck **2440.** The toothbrush **2400** includes a plurality of bristles **2450,** a second set of bristles **2460** disposed on the brush head tip **2430,** and a plurality of elastomeric elements **2454.** The arrangement, height, and configuration of the bristles **2450, 2460,** and elastomeric elements **2454** may be as described herein with regard to any of the other embodiments.

Fig. **39** illustrates another embodiment of the toothbrush **2500** having a brush head **2520,** a movable bristle carriers **2552** (shown in dashed lines), and a neck **2540.** The toothbrush **2500** includes a plurality of bristles **2550** and a plurality of elastomeric elements **2554** preferably disposed at opposing angles from each other. That is, the elastomeric elements **2554** preferably extend at an angle **O** as shown in Fig. **39.** The collection of bristles **2550** preferably extend in the opposite direction but at a similar angle. The toothbrush **2500** also includes a plurality of bristles **2560** extending from a brush head tip **2530** (shown partially in dashed lines). The brush head tip may also include a region **2532** extending above the flat, brush-facing surface of the brush head **2520.** This raised region **2532** may further provide an arcuate outer surface that may be defined by a common radius such as radius **Q** shown in Fig. **39.** The arrangement, height, and configuration of the bristles **2550, 2560** and elastomeric elements **2554** may be as described herein with regard to any of the other embodiments.

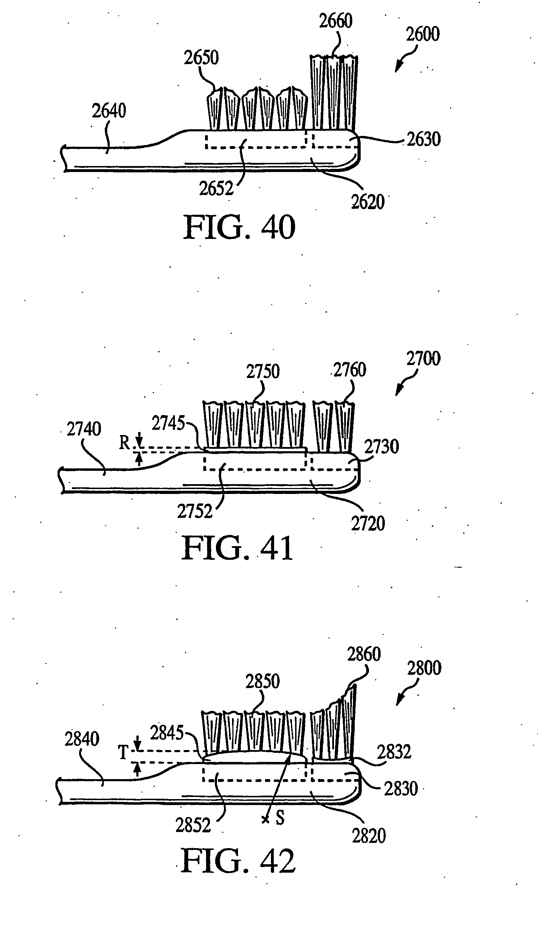

Fig. **40** illustrates yet another embodiment of the toothbrush **2600** having a brush head **2620,** a movable bristle carriers **2652** (shown in dashed lines), and a neck **2640.** The toothbrush **2600** includes a brush head tip **2630** (also shown in dashed lines) having a plurality of bristles **2660** extending therefrom. Another set of bristles **2650** are provided on the brush head **2620,** and specifically on the movable bristle carriers **2652.** In this embodiment, the height of the bristles **2660** is significantly greater than the height of the bristles **2650.** As previously described herein, the bristles **2650, 2660** may be arranged in groups or tufts wherein the bristles within a particular tuft may have different lengths.

Fig. **41** illustrates yet another embodiment of the toothbrush **2700** having a brush head **2720,** a neck **2740,** a movable bristle carriers **2752** (shown partially in dashed lines), a plurality of bristles **2750** extending from the bristle carriers **2752,** and another set of bristles **2760** extending from a brush head tip **2730** (shown in dashed lines). In this embodiment, the bristle carriers **2752** has a relatively large thickness such that its flat, brush-facing surface is generally elevated above or disposed closer to the user during brushing, than the brush-facing surface of the brush head tip **2730** and other portions of the brush head **2720.** The elevated portion of the bristle carrier **2752** that extends past the adjacent regions of the brush head **2720** and the brush head tip **2730** is designated in Fig. **41** as **2745.** For bristle configurations in which the distal ends or brushing surfaces of the bristles **2750** and **2760** generally extend along a common plane, the resulting shorter length of bristles **2750** imparts an increased stiffness to those bristles. The extent of elevation of the region **2745** of increased thickness is shown in Fig. **41** as dimension **R. R** may range from about 1 mm to about 5 mm.

Fig. **42** illustrates another embodiment of the toothbrush **2800** having a brush head **2820** and a neck **2840.** A plurality of bristles **2850** are provided on the brush head and extend from a bristle carrier **2852** (partially shown in dashed lines) which is preferably movable with respect to the head **2820.** The toothbrush **2800** also comprises another plurality of bristles **2860** that extend from a brush head tip **2830** (partially shown in dashed lines). In this embodiment, the brush-facing surface of the bristle carriers **2852** is preferably sloping, more preferably arcuate, and most preferably convex as shown in Fig. **42.** In the event this surface is convex, it is further defined by a radius **S** as shown in Fig. **42.** The upwardly directed brush-facing surface of the bristle carrier **2852** is also preferably elevated above the relatively flat, brush-facing surface of the brush head **2820,** preferably by dimension **T** shown in Fig. **42.** Dimension **T** may range from about 1 mm to about 5 mm. The elevated portion of the bristle carrier **2852** that extends past the adjacent regions of the brush head **2820** is designated as **2845.** The brush-facing surface of the brush head tip **2830** is preferably arcuate and more preferably concave. The elevated portion of the bristle carrier **2830** that extends past the adjacent regions of the brush head **2820** is designated as **2832.** The arrangement, height, and configuration of the bristles **2850** and **2860** may be as described herein with regard to any of the other embodiments.

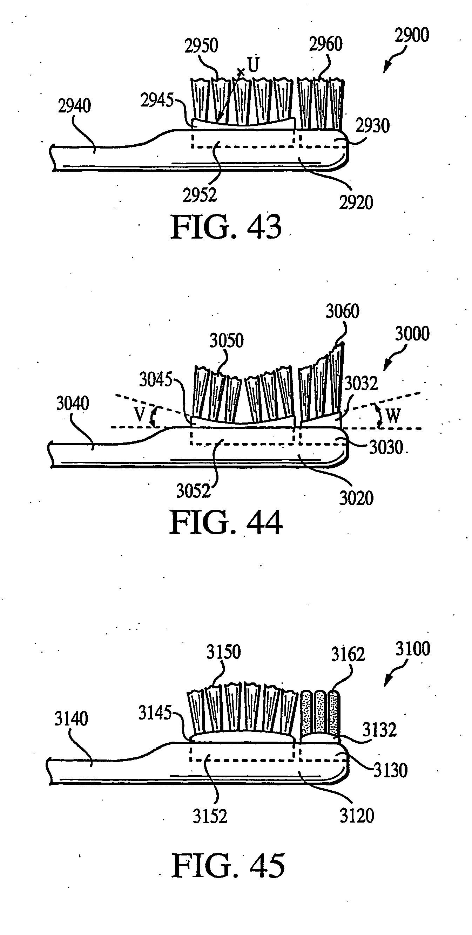

Fig. **43** illustrates another embodiment of the toothbrush **2900** having a brush head **2920,** a movable bristle carrier **2952** (shown partially by dashed lines), a brush head tip **2930** (shown by dashed lines), and a neck **2940.** A collection of bristles **2950** extend from the bristle carrier **2952.** And, another collection of bristles **2960** extend from the brush head tip **2930**. The bristles **2950** are preferably disposed and retained on the movable bristle carrier **2952**. The bristle carrier **2952** provides an upwardly directed, brush-facing surface which is depicted in Fig. **43** as concave. Preferably, this concave surface is defined by a common radius U. The elevated portion of the bristle carrier **2952** that extends past the adjacent regions of the brush head **2920** is shown as region **2945**. The arrangement, height, and configuration of the bristles **2950** and **2960** may be as described herein with regard to any of the other embodiments.

Fig. **44** illustrates yet another embodiment of the toothbrush **3000** according to the present invention. The toothbrush **3000** comprises a brush head **3020** and a neck **3040**. The toothbrush **3000** includes a plurality of bristles **3050** extending from a bristle carrier **3052** (shown partially in dashed lines) that is movably disposed on the brush head **3020**. And, the toothbrush **3000** includes another set of bristles **3060** extending from a brush head tip **3030** (shown partially in dashed lines). The outermost surface of the bristle carrier 3052 may be provided such that it has one or more sloping surfaces defined along a raised region **3045** as shown in Fig. **44**. These slopes may be carried through such that the distal-most ends of the bristles **3050** mirror this same slope or, another or different slope. Similarly, the outermost end of the bristles **3060** may also reflect the sloping surface of a raised region **3032** of the brush head end **3030**. Preferably, the bristle carrier **3052** provides at least a region having a sloping brush-facing surface. That slope preferably extends along an angle V as shown in Fig. **44**. Angle **V** preferably is from about 10° to about 60°, and more preferably from about 20° to about 30°. Similarly, the brush head tip **3030** preferably provides a sloping brush-facing surface that extends along an angle **W**. Angle **W** preferably ranges from about 10° to about 45°.

Fig. **45** is another embodiment of the toothbrush **3100** having a brush head **3120** and a neck **3140**. The toothbrush **3100** includes a plurality of elastomeric elements **3162** extending from a brush head tip **3130** (shown partially in dashed lines). The toothbrush **3100** also comprises a plurality of bristles **3150** extending from a movable bristle carriers **3152**. The bristle carriers **3152** contains a region **3145** that is raised relative to the adjacent regions of the brush head **3120**. Similarly, the brush head tip **3130** contains a region **3132** that is raised relative to the adjacent regions of the brush head **3120**. Either or both of the outwardly directed, brush-facing surfaces of the bristle carriers **3152** and the brush head tip **3130,** may be flat, sloping, arcuate, convex or concave. Furthermore, the arrangement, height, and configuration of the bristles **3150** and elastomeric elements **3162** may be as described herein with regard to any of the other embodiments.

Another preferred bristle configuration is similar to the configurations shown in Figs. 36 and **45,** i.e having an interior group of bristles that extend "above" or have a greater height than adjacent bristles, however features a stepped or plateau configuration. In this configuration, the change in bristle height is not gradual or varying as shown in Figs. **36** and **45,** but instead is stepped. That is, the change in height from shorter bristles disposed around the taller medially disposed bristles is rather abrupt. The difference in height between these two groups of bristles is about 0.5 mm to about 3 mm, and more preferably from about 0.75 mm to about 1.5 mm.

Referring to the various bristle carriers illustrated and described herein, it can be seen that the profile or configuration of the outwardly facing surface of the carrier, generally referred to herein as a brush-facing surface, may be in a variety of forms and shapes. One particularly preferred shape is a concave shape (when viewing the bristle carrier from its side, and its side that generally extends along the same direction as the longitudinal axis of the toothbrush). A concave shape promotes the retention of dentifrice or polishing material that may be used during brushing. Likewise, a convex surface promotes the dissipation of dentifrice in the region of the bristles along the brush head. Most preferably, bristle carriers in accordance with the present invention utilize a non-flat brush-facing surface.

Another aspect of interest in the design of a brush head is the selection, placement, and configuration of bristles along the bristle carrier, brush head tip, and brush head. Generally, the stiffness of a bristle or tuft of bristles increases as the length of the bristle(s) decreases. Thus, changes in bristle stiffness may be achieved by altering the length of the subject bristles. This characteristic is important to consider when providing a bristle carrier having a brush-facing surface that is non-planar. It will be appreciated that bristle stiffness will vary at different locations along the bristle carrier since the length or height of the bristles extending therefrom varies. Alternatively, the stiffness of bristles having equal heights will be generally the same. The present invention includes a wide array of different combinations of bristle carrier shapes and configurations; and bristle length, materials, and configuration. Many of these preferred configurations have been exemplified in the referenced figures. Additionally, in some embodiments, it is preferred to utilize diameters of bristles and/or diameters of tufts of bristles on the movable bristle carrier that are larger than corresponding diameters of bristles or tufts of bristles that are disposed on the brush head tip. In yet other embodiments, it may be desirable to utilize diameters of bristles/tufts on the carrier that are smaller than corresponding bristles/tufts on the tip.

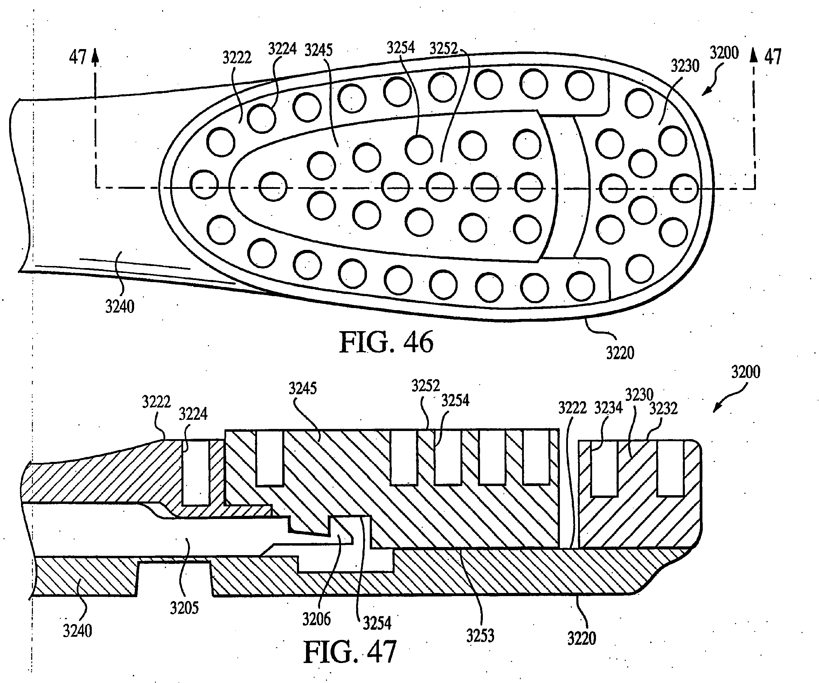

Figs. **46** and **47** illustrate in greater detail a preferred brush head **3220** of an embodiment of the toothbrush **3200** according to the present invention. The toothbrush **3200** comprises a brush head **3220** and a neck **3240** integrally formed with and extending therefrom. The toothbrush **3200** further comprises a movable bristle carrier **3245** defining a plurality of holes or apertures **3254** adapted for receiving and retaining bristles or bristle tufts (not shown). The bristle carrier **3245** provides an outwardly directed brush-facing surface **3252**. Defined along an oppositely directed face is an under-surface **3253**. A receiving aperture **3254** is also defined along the under-surface **3253** and is sized and adapted to receive and engage a distal end **3206** of a movable drive shaft **3205.** As will be appreciated, the drive shaft **3205** reciprocates within the neck **3240** and imparts a similar reciprocating type motion to the bristle carrier **3245.** The toothbrush **3200** also comprises a brush head tip **3230** defining an outwardly directed brush-face surface **3232** and one or more apertures **3234** adapted to receive and retain bristles or bristle tufts (not shown). The brush head **3220** may also define one or more apertures located along the brushing face of the head **3220,** such as apertures **3224** defined in the region **3222** of the head **3220.**

Although the assembly shown in Fig. **47** for engaging the bristle carrier **3245** with the shaft **3205** is generally preferred, i.e. use of a notched distal end **3206** that is received in aperture **3254,** other assemblies for engaging a movable bristle carrier with a drive shaft may be utilized. For example, the present invention includes engagement assemblies using pins or other fasteners that affix the drive shaft to the carrier. Alternatively, other assemblies may be used such as snap-fit connections, releasable engagement assemblies, and nonreleasable assemblies. The materials employed for the components of the engagement assemblies can be polymeric, metal, or any other material having suitable strength and durability properties.

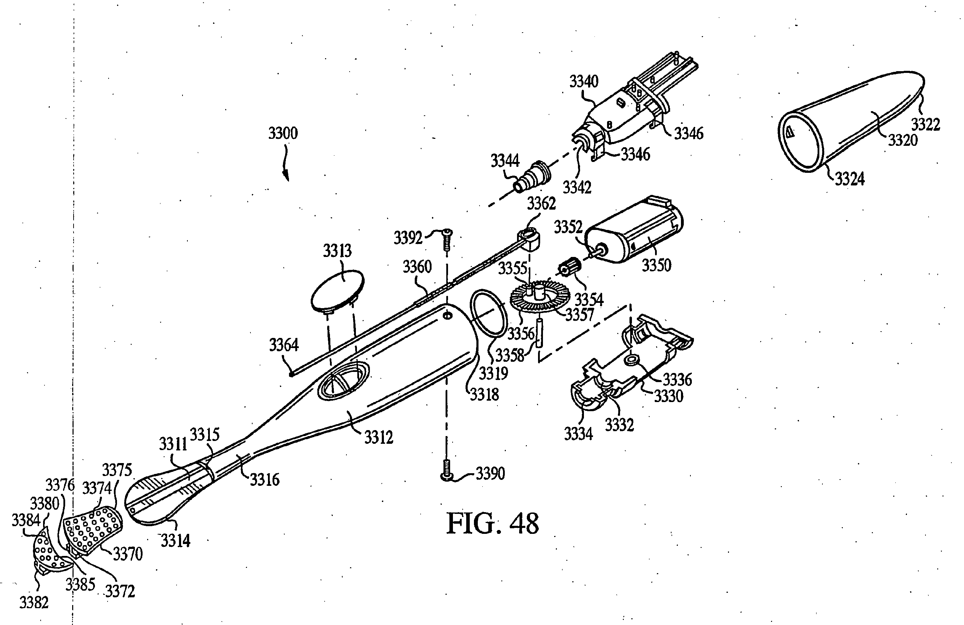

Fig. **48** is a partial exploded view of an embodiment of the toothbrush **3300.** This embodiment of the inventive toothbrush **3300** comprises a body or housing **3312** and an end cap **3320.** The body **3312** is essentially a one-piece body having a major portion including a neck **3316** and an end **3318,** and a brush head **3314** extending from the neck **3316.** Preferably, the brush head **3314,** neck **3316,** and body **3312** are generally continuous and integrally formed with one another. The body 3312 and portions of the neck **3316** and head **3314,** define a hollow interior region, which house a drive mechanism. The major portion of the body **3312** also defines a recessed region or one or more apertures along its outer surface which receives an electrical switch (not shown) for operating the drive mechanism of the electric toothbrush described in greater detail herein. A protective cover **3313** preferably fits within this recessed region. The end cap **3320** includes a closed end **3322** and an opposite open end **3324.** The open end **3324** is sized to engage and generally seal the end **3318** of the housing **3312.** An O-ring or other sealing member **3319** may be used at the interface of the ends **3318** and **3324** of the housing components.

One of the embodiments of the toothbrush further comprises a drive motor **3350** having a drive shaft **3352.** The motor **3350** is a DC motor similar to motors known to those skilled in the art and includes various switching circuits and a battery or other power source (not shown). These components are housed and retained within the hollow interior region defined in the body **3312** and optionally within the end cap **3320.** A drive gear **3354** is engaged to the drive shaft **3352.** A lower motor mount **3330** is provided. An upper motor mount **3340** is also provided which, together with the lower motor mount **3330,** generally cradle, retain, and secure the motor **3350** within the interior of the housing **3312** and cap **3320.** The lower motor mount **3330** includes inner and outer drive shaft supports **3332** and **3334,** respectively. The lower motor mount **3330** also includes a base or aperture **3336** for receiving a mount or axle **3358** for a drive gear described in greater detail herein. The upper motor mount **3340** includes an inner drive shaft support **3342** and a. drive shaft housing **3344** which preferably engages the inner mount **3342** and optionally the outer mount **3334** of the lower motor mount **3330.** The upper motor mount **3340** additionally includes a plurality of engagement legs **3346** that preferably engage the lower motor mount **3330** for retaining motor **3350** disposed between the two assemblies. It will be appreciated that instead of utilizing an upper and lower motor mount, a single one-piece mount or retaining structure could be employed.

The drive gear **3354** is engaged with a crown gear **3356.** Crown gear **3356** is rotatably supported at its center **3357** by the axle or pivot member **3358.** The crown gear **3356** includes an offset engagement member **3355** to which is attached a pinion end **3362** of a drive shaft **3360.** The drive shaft **3360** includes the noted pinion end **3362** that includes a receiving aperture or other engagement member for engagement with the offset member **3355.** The drive shaft **3360** further includes a distal end **3364** which is used to engage and thus drive a movable bristle carrier described in greater detail herein. The drive shaft **3360** extends within the interior hollow cavity of the housing **3312** and preferably through at least a portion of the neck **3316.** The distal end **3364** of the drive shaft **3360** is engaged with a bristle carrier **3370,** described below. The end **3364** is accessible through an aperture in the brush head **3314.**

This embodiment of the toothbrush **3300** further includes a movable bristle carrier **3370** which, upon assembly in the toothbrush **3300,** reciprocates along the brush head **3314.** Preferably, the movable bristle carrier **3370** reciprocates within a channel **3311** defined along the brush head **3314,** and most preferably in a direction parallel with the longitudinal axis of the toothbrush **3300.** Disposed along the underside of the bristle carrier **3370** is a ridged member **3372.** This ridged member **3372** is configured to move within, yet be retained by, the channel **3311.** The bristle carrier **3370** defines a plurality of apertures **3374** within which are disposed a plurality of bristles or bristle tufts (not shown). The bristle carrier **3370** includes a first end **3375** which, upon assembly with the brush head **3314,** is preferably disposed adjacent a region or edge **3315** defined between the neck **3316** and the brush head **3314** of the body or housing **3312.** The opposite end of the movable bristle carrier **3370** is end **3376** and is preferably curvilinear as shown in Fig. **48.**

This embodiment of the toothbrush **3300** further comprises a stationary bristle carrier tip **3380** which defines a plurality of apertures **3384** for retaining bristles or bristle tufts (not shown), a first end **3385** which engages or is disposed adjacent to the end **3376** of the movable bristle carrier **3370,** and a ridged member **3382** disposed along the underside of the tip **3380.** By "stationary" it is meant that the carrier tip **3380,** once assembled and engaged with the brush head **3314,** is generally secured to the brush head **3314** and does not move with the bristle carrier **3370**. Preferably, the ridged member **3382** is sized in a similar fashion and configuration as the ridged member **3372** of the bristle carrier **3370.** Both of the ridged members **3372** and **3382** are preferably retained within channel **3311** defined in the brush head **3314.**

One or more threaded fasteners **3390** and **3392** may be utilized to affix the body **3312** to the end cap **3320.** It will be understood that other techniques or components may be utilized to assemble the housing together.

Upon operation of this embodiment of the toothbrush **3300,** an electrical circuit is completed between a power source such as a battery and the motor **3350.** Details as to the power source and electrical operating characteristics of the motor are provided herein. Rotation of the drive gear **3354** causes rotation of the crown gear **3356.** Preferably, the axis of rotation of the crown gear **3356** is perpendicular or transverse to the axis of rotation of the drive gear **3354.** Rotation of crown gear **3356** imparts a reciprocating motion to the drive shaft **3360** extending within the hollow interior region defined within the body **3312,** neck **3316,** and optionally the head **3314.** The distal end **3364** of the drive shaft is engaged with the movable bristle carrier **3370,** and so, imparts a corresponding reciprocating motion to the carrier **3370.**

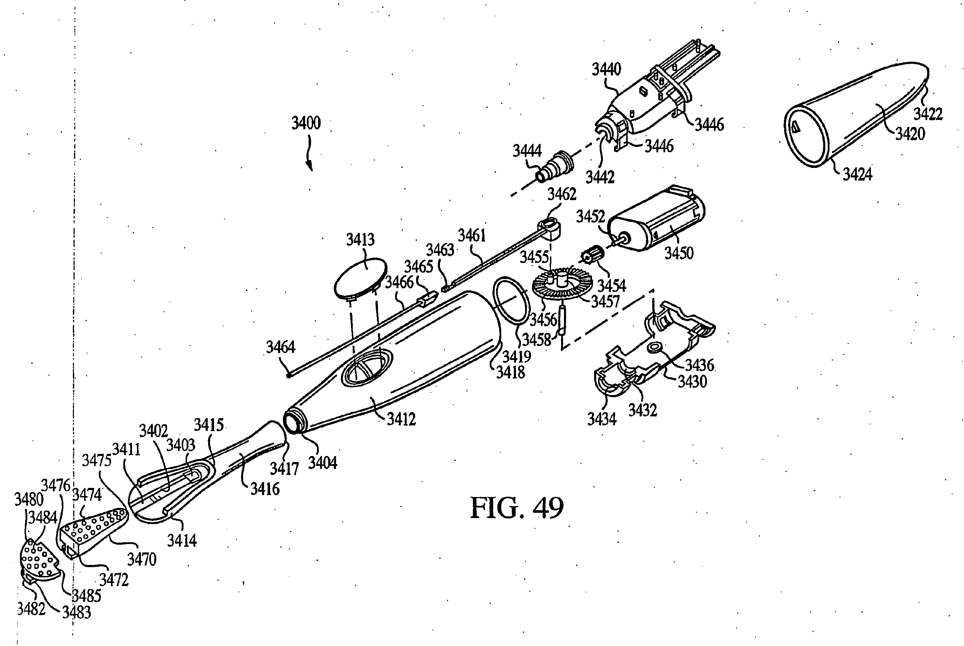

Fig. 49 illustrates another embodiment of the toothbrush **3400** in accordance with the present invention. The toothbrush **3400** includes a body portion **3412,** a neck portion **3416,** and an end cap **3420.** The body portion **3412** defines a first end **3418** and an opposite end **3404** which preferably includes a screw member or threaded region. The end cap **3420** defines a closed end **3422** and an opposite open end **3424.** The open end **3424** is sized and configured to releasably engage the end **3418** of the body portion **3412.** An O-ring or other sealing member **3419** is preferably used at the interface between the ends **3424** and **3418.** The neck **3416** includes an end **3417** and a brush head **3414** preferably integrally formed at the end of the neck **3416** opposite the end **3417.** The end **3417** preferably includes provisions for releasably engaging a screw member defined at the end **3404** of the body member **3412.** The brush head **3414** preferably includes a first channel member **3411** and an aperture **3403** which provides access to a hollow region extending within the brush head **3414** and neck region **3416.** An optional second channel **3402** may be defined along the brush head **3414** which further provides guidance for a movable bristle carrier described in greater detail herein. A guide wall **3415** is preferably defined along the brush head **3414** and may extend around a portion of the periphery of the surface of the brush head.

This embodiment of the toothbrush **3400** further includes a motor **3450** providing a powered drive shaft **3452.** An electrical switching circuit and a power source, although not shown, are preferably retained within the hollow region defined within the body **3412** and end cap **3420.** A lower motor mount **3430** and an upper motor mount **3440** preferably cradle and retain the motor **3450** within the interior hollow region defined within the body **3412** and end cap **3420.** The interior hollow region extends within the neck **3416** and optionally within a portion of the brush head **3414.** The lower motor mount **3430** includes a base or aperture **3436** for receiving a pivot or axle member **3458** for a drive gear described in greater detail herein. The lower motor mount **3430** includes an inner drive support **3432** and an outer drive support **3434** as shown. The upper motor mount **3440** includes a drive support **3442** which preferably engages with the inner and/or outer drive supports **3432** and **3434** of the lower motor mount **3430.** A drive housing **3444** is also provided which preferably engages the motor mount **3440.** A plurality of engagement legs **3446** are preferably formed from the upper motor mount **3440** which engage the lower mount **3430.** As previously noted with regard to Fig. 48, it will be appreciated that a one-piece motor mount component may be utilized.

A drive gear **3454** which is secured to the drive shaft **3452** of the motor **3450** is preferably in engagement with a crown gear **3456.** The crown gear is rotatably supported by the axle or pivot member **3458** which in turn is received in the base **3436** of lower motor mount **3430.** The crown gear **3456** includes a centrally located guide member **3457** and an offset member **3455.** The offset member **3455** is engaged with a pinion end **3462** of a drive shaft component **3461.** The drive shaft component **3461** includes an end **3463** defined oppositely from the pinion member **3462.** Also provided is another drive shaft member **3466** which includes an end **3465** and an opposite end **3464.** The end **3465** preferably engages the end **3463** of the drive shaft component **3461.** The opposite end **3464** of the drive shaft component **3466** preferably engages a movable bristle carrier described in greater detail herein. The drive shaft components **3466** and **3461** preferably reside within the interior hollow region of the body **3412** and neck **3416.** A releasable and protective cover **3413** preferably is attached along a recessed region or one or more apertures defined within the body **3412.** The cover **3413** serves as a protective housing or cover for a switch, the position of which may be changed through the cover **3413.**

This embodiment of the toothbrush **3400** also comprises a movable bristle carrier **3470** and a stationary bristle carrier tip or end **3480.** The movable bristle carrier **3470** defines a plurality of apertures **3474** for receiving and retaining a plurality of bristles and bristle tufts (not shown). The bristle carrier **3470** includes a first end **3475** and an opposite second end **3472.** The end **3475** is preferably shaped and sized to fit within the channel **3411** defined along the brush head **3414** and preferably having a similar configuration as the guide wall **3415.** The movable bristle carrier **3470** also includes a ridged member **3476** along its underside, sized to engage the channel **3411** defined along the brush head **3414.** The distal end **3464** of the drive shaft component **3466** is engaged with the bristle carrier **3470.** Preferably, the end **3464** is accessible through aperture **3403** defined in the brush head **3414.**

The bristle carrier tip **3480** includes a plurality of apertures **3484** adapted for receiving and retaining bristles or bristle tufts (not shown). The bristle carrier tip **3480** also includes a first end **3485** adapted to face the end **3472** of the movable bristle carrier **3470** and portions of the guide wall **3415** of brush head **3414**. The bristle carrier tip **3480** also includes an opposite end **3482** and may further include a ridged member **183** along its underside, to engage and reside within the channel **3411** defined within the brush head **3414**. The ridged member **3483** is preferably configured in a similar fashion as the ridged member **3476** of the bristle carrier **3470**. Upon assembly, the bristle carrier tip **3480** is secured to the distal end of the brush head **3414**.

This embodiment of the toothbrush **3400** operates in a similar fashion as the previously described embodiment of the toothbrush **3300**. Upon completion or closure of an electrical circuit between the motor **3450** and a power source, the drive shaft **3452** and drive gear **3454** rotate. Such rotation causes rotation of the crown gear **3456** and imparts a reciprocating motion to the drive shaft members or components **3461** and **3466**. Engagement between the drive shaft component **3466** and the bristle carrier **3470** imparts a translating or reciprocating movement to the carrier **3470**.

The present invention toothbrushes, and particularly the embodiments of the toothbrush **3300** and **3400**, have been found to operate utilizing remarkably minor amounts of power. And surprisingly, these electric toothbrushes provide comparable brushing efficacy and performance as other commercially available toothbrushes. These dramatic gains are believed to result from a combination of one or more of the following factors: (1) the use of translating or reciprocating motion for the movable bristle carrier during operation of the present invention toothbrushes; (2) the selection of the degree or extent of motion of the bristle carrier, i.e. its "stroke"; (3) the particular type of motor utilized in the toothbrushes; (4) the operating speed employed by the motor; (5) the gear ratio between a motor drive gear and a crown gear used in the drive mechanism of the present invention toothbrushes; (6) the particular assembly of components used in the drive mechanism and the relatively few number of components; (7) the use of static bristles in conjunction with movable bristles; and (8) the particular bristle configuration employed along the brush head.

The present invention approach of using a translating plate to impart motion to a plurality of bristles has been found to provide significant improvement in reducing energy consumption and operating current and voltage requirements as compared to currently known electric toothbrush assemblies. For example, comparative tests between (i) Assignee's relatively energy efficient and hugely popular Crest7 Spin Brush7 using an oscillating spin head and (ii) a translating or reciprocating bristle carrier according to the present invention, reveals the following:

**TABLE 2**

|  | Spin Head | Translating Plate |
|---|---|---|
| Voltage to Initiate Movement (Under 1 lb. Loading) | >1.8 V | >1.28 V |
| Current Draw at 3.0 V (under 11b. Loading) | 0.8 A | 0.5 A |

The data presented in Table 2 illustrates that an embodiment of the toothbrush according to the present invention, utilizing a translating plate or bristle carrier, requires significantly less voltage (approximately 28%) and less amperage (approximately 37%) than a leading commercially successful toothbrush utilizing an oscillating or spin head configuration.

Another aspect of the high efficiency drive mechanisms according to the present invention relates to the stroke length of the movable bristle carrier, such as bristle carriers 3370 and 3470. The preferred parameters of the movement of the reciprocating bristle carrier are as follows. Preferably, the reciprocating carrier has a stroke length at least about 0.5 mm, more preferably at least about 1.0 mm, more preferably at least about 1.25 mm, and most preferably at least about 1.5 mm; and less than about 5 mm, more preferably less than 3.5 mm, more preferably less than 2.5 mm, and most preferably less than 1.7 mm. It will be appreciated that the present invention drive mechanisms may utilize stroke lengths greater or lesser than these various preferred values. Although not wishing to be bound to any particular theory, it is believed that excessive amounts of power, i.e. battery power, are consumed when stroke length is excessively long. And, if stroke length is too short, brushing efficacy is greatly reduced. As previously noted, the direction of movement of the bristle carrier is parallel with the longitudinal axis of the toothbrush.

The motor used in the embodiments of the toothbrush described herein is preferably particularly adapted to provide a high efficiency power source for the drive mechanism. A standard motor may be modified by using less windings and reducing the voltage requirements to about 1.5 volts. Typical standard motors exhibit general current draw characteristics as follows: Without loading, a draw of about 1.06 amps is required, and with loading, a draw of at least 1.0 amp is required. The preferred embodiment motors used in the electric toothbrush embodiments described herein draw less than 0.3 amps without a load, and approximately 0.4 to about 0.6 amps under a load. The "loads" referred to are typical operating loads placed upon the motor when operating the embodiments of the toothbrushes described herein during routine brushing.

The preferred operating speed for the motors used in the embodiments of the toothbrush described herein ranges from about 1500 rpm to about 3500 rpm, and is most preferably about 2500 rpm. An rpm of 2500 provides about 1250 stroke cycles per minute as measured at the reciprocating bristle carrier when utilizing the preferred embodiment drive mechanisms described herein. These operating speeds are given with respect to the motor engaging the drive mechanism, however, no brushing load being placed upon the bristle carrier. It will be appreciated that upon application of a load to the motor, the operating speed of the motor may be reduced by about 30% to about 35%. These values are estimates and the extent of reduction in operating speed will depend upon a host of factors.

This relationship of motor operating speed and bristle carrier stroke speed is an indication of the preferred gear ratio between the drive gear engaged to the drive shaft of the motor (such as drive gear **3354** in Fig. **48** or drive gear **3454** in Fig. **49)** and the crown gear (such as crown gear **3356** in Fig. **48** or crown gear **3456** in Fig. **49)** to which the drive shaft is engaged at the offset member. The preferred ratio is from about 1:1 to about 3:1, and most preferably about 2:1. Therefore, at this most preferred ratio, for every two revolutions of the motor drive shaft, the crown gear rotates once. The noted preferred gear ratio of 2:1 has been found to provide a desirable combination of range of motion and speed as measured at the bristle carrier to provide excellent brushing characteristics in conjunction with an acceptable level of power consumption.

The use of the noted crown gear in the preferred embodiment drive mechanisms described herein is particularly desirable since that type of drive component, and its orientation shown in the referenced figures, requires relatively few components and enables a relatively small housing to be utilized since the resulting overall volume of the drive mechanism is small. The preferred crown gear used in the drive mechanism described herein utilizes from about 8 or 10 to about 40 gear teeth. Most preferably, the crown gear has about 20 gear teeth. This is a relatively small number of teeth for the given size and application of the crown gear. This results in a relatively tall profile for the gear teeth of the brown gear. Accordingly, the preferred crown gears of the present invention utilize an offset member that must extend above the height of the gear teeth. This is necessary so that sufficient clearance is provided for the gear teeth of the crown gear. The crown gear is rotatably supported by an axle having a height such that the drive shaft engaged with the offset member is aligned with the bristle carrier. This particular arrangement and combination of components provides a drive mechanism utilizing a remarkably few number of components. The fewer the number of components, the more efficient is the transfer of motion and greater ease in assembly and production.

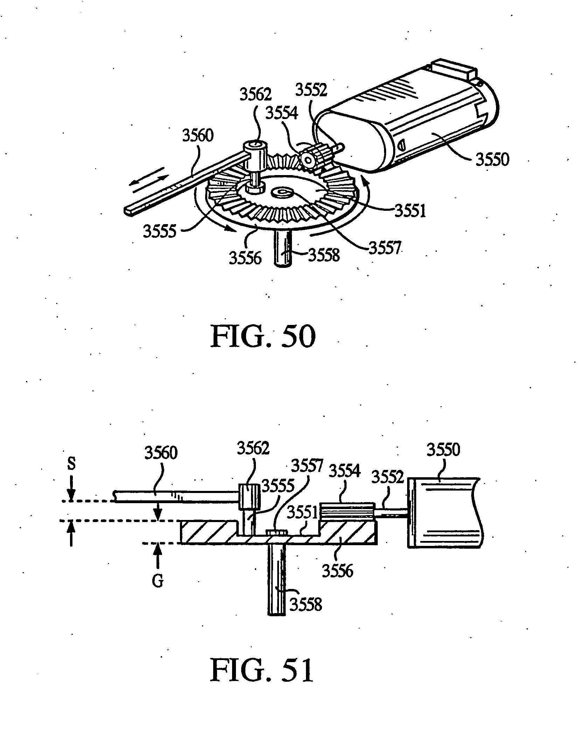

Referring to Fig. **50,** a portion of a preferred embodiment drive mechanism is shown. A motor **3550** providing a powered drive shaft **3552** and a drive gear **3554** secured to the shaft **3552** is engaged with a crown gear **3556.** The crown gear **3556** is rotatably supported at its center **3557** by an axle **3558.** An outwardly extending offset member **3555** is provided along an outer face **3551** of the crown gear **3556.** The member **3555** is disposed radially outward from the center **3557** of the crown gear **3556.** A drive shaft **3560** is engaged at its end **3562** with the offset member **3555.** Upon rotation of the drive shaft **3552** and gear **3554,** the crown gear **3556** rotates about axle **3558.** That movement in turn imparts a reciprocating motion to the drive shaft **3560.**

Fig. **51** is a side elevational view of the portion of the preferred embodiment drive mechanism depicted in Fig. **50.** Fig. **51** illustrates a feature of the preferred embodiment drive mechanisms, that of the elevated orientation of the reciprocating drive shaft with respect to the crown gear. Specifically, it can be seen that the gear teeth of the crown gear **3556** have a profile or overall height shown as height G. The offset member **3555** is engaged with the drive shaft **3560** such that a distance S is maintained between the shaft **3560** and the gear teeth. Most preferably, the distance S is also the distance necessary to maintain alignment between the offset member **3555** and the bristle carrier disposed on the brush head. Most preferably, the drive shaft **3560** is the only drive component extending between and engaging those components.

As previously noted, another aspect of the embodiments of the toothbrush according to the invention, and particularly, of the drive mechanisms described herein, is that a relatively few number of drive components are utilized. This is readily apparent from the exploded views in Figs. **48** and **49.** This design strategy reduces the number of interconnections and engagements between drive components and so a more direct assembly of drive components is achieved. This approach greatly simplifies assembly, reduces overall costs of production, and leads to a more commercially viable consumer product.

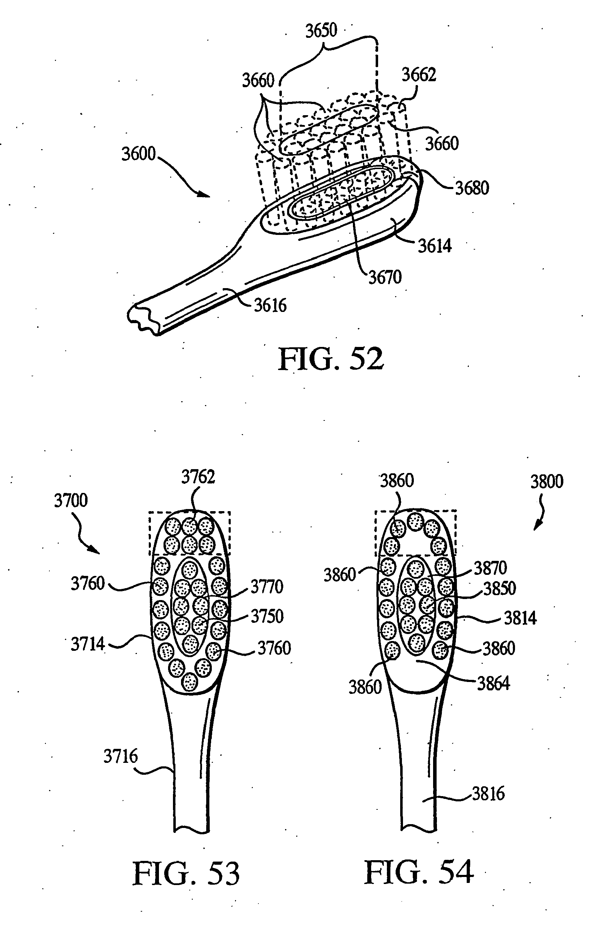

Additionally, the use of static bristles in combination with a plurality of movable bristles, assists in reducing the overall load on the reciprocating bristle carrier. Figs. **52-54** illustrate this feature in greater detail. Fig. **52** illustrates a portion of an embodiment of the toothbrush according to the invention **3600** comprising a brush head **3614,** a neck **3616,** a movable bristle carrier **3670**, and an end component **3680.** The movable bristle carrier **3670** supports and retains a plurality of bristles **3650,** designated herein as movable bristles. These are shown in dashed lines for clarity. The end component **3680** supports and retains a plurality of bristles **3662,** designated herein as stationary bristles. Additionally, the brush head **3614** supports and retains a plurality of bristles **3660,** also designated herein as stationary bristles, that preferably, are disposed along the periphery of the movable bristle carrier **3670** and the bristles **3650** disposed thereon. The stationary bristles **3662** and **3660** are also shown in dashed lines.

The bristle configuration shown in Fig. **52** is significant in that the plurality of bristles that are stationary, i.e. bristles **3660** and **3662,** essentially surround or partly so, the movable bristles **3650** retained on the movable bristle carrier **3670.** This configuration has been found to reduce the load otherwise applied to the bristles **3650** and movable bristle carrier **3670** during brushing and operation of the toothbrush **3600.** This characteristic is believed to result from the stationary bristles **3660** and **3662** accommodating a portion of the brushing load, otherwise placed upon the bristles **3650** and carrier **3670.** The distribution of the brushing load between the stationary bristles **3660** and **3662,** and the movable bristles **3650,** is determined by a number of factors including, but not limited to: (i) the relative heights of the stationary and movable bristles, (ii) the materials forming the stationary and movable bristles, (iii) the profile of the brushing surface resulting from the distal ends of the stationary and movable bristles, (iv) the respective densities (or bristles per unit area) of the stationary and movable bristles, and (v) the arrangement of the stationary bristles and movable bristles. By adjusting one or more of these factors, the load applied to the movable bristle carrier during brushing may be reduced by, for example, increasing the relative height of the stationary bristles or decreasing the height of the movable bristles. The load applied to the movable bristle carrier may also be reduced by increasing the density of the stationary bristles disposed around the movable carrier. The load may also be reduced by selecting particular materials that exhibit a high degree of stiffness for the stationary bristles as compared to the movable bristles.

Fig. **53** illustrates another embodiment of the toothbrush **3700** comprising a brush head **3714,** a neck **3716,** a movable bristle carrier **3770,** a plurality of movable bristles **3750** supported and retained on the carrier **3770,** a first plurality of stationary bristles **3760** disposed on the brush head **3714,** and a second plurality of stationary bristles **3762** disposed on the end of the brush head **3714.** This toothbrush embodiment **3700** utilizes a bristle configuration in which a large number of stationary bristles, such as **3760** and **3762,** are disposed around the movable bristles **3750,** or substantially so. It will be noted that the group of stationary bristles **3762** are primarily disposed along the end of the brush head **3714.** And, the other group of stationary bristles **3760** generally extend around the remaining periphery of the movable bristle carrier **3770.** This arrangement has been found to offer good brushing efficacy and significant reductions in brushing loads otherwise applied to the bristles **3750** and thus, the bristle carrier **3770.**

Fig. **54** illustrates another embodiment of the toothbrush **3800** comprising a brush head **3814,** a neck **3816,** a movable bristle carrier **3870,** a plurality of movable bristles **3850** supported and retained thereon, and a plurality of stationary bristles **3860** extending generally around the periphery of the bristle carrier **3870.** In this embodiment, the stationary bristles **3860** extend around at least a majority of the outer periphery of the bristle carrier **3870.** Preferably, the bristles **3860** extend continuously, or substantially so, around the movable bristle carrier **3870** and the movable bristles **3850** disposed thereon. It is not necessary that the stationary bristles **3860** be disposed in a region adjacent the movable bristle carrier that is opposite the distal end of the brush head **3814.** This region is shown in Fig. **54** as region **3864.** This particular bristle arrangement has been found to offer good brushing performance and significant reductions in brushing loads otherwise applied to the bristles **3850** and thus, the bristle carrier **3870.**

Figs. **53** and **54** also illustrate brush heads utilizing different bristle densities along their distal ends, such as in the region of a bristle carrier tip, such as tip **3380** in Fig. **48.** These regions are shown in dashed lines. The dashed region of Fig. **53** contains six bristle tufts per unit area whereas Fig. **52** contains five bristle tufts per unit area.

Another significant aspect that the present invention provides is a unique engagement assembly comprising a gear that is driven by the electric toothbrush motor and a drive shaft that powers one or more movable bristle carriers. This engagement assembly efficiently converts rotary motion of the gear to reciprocating motion of the drive shaft. The assembly operates and performs the noted conversion in a remarkably quiet and smooth manner.

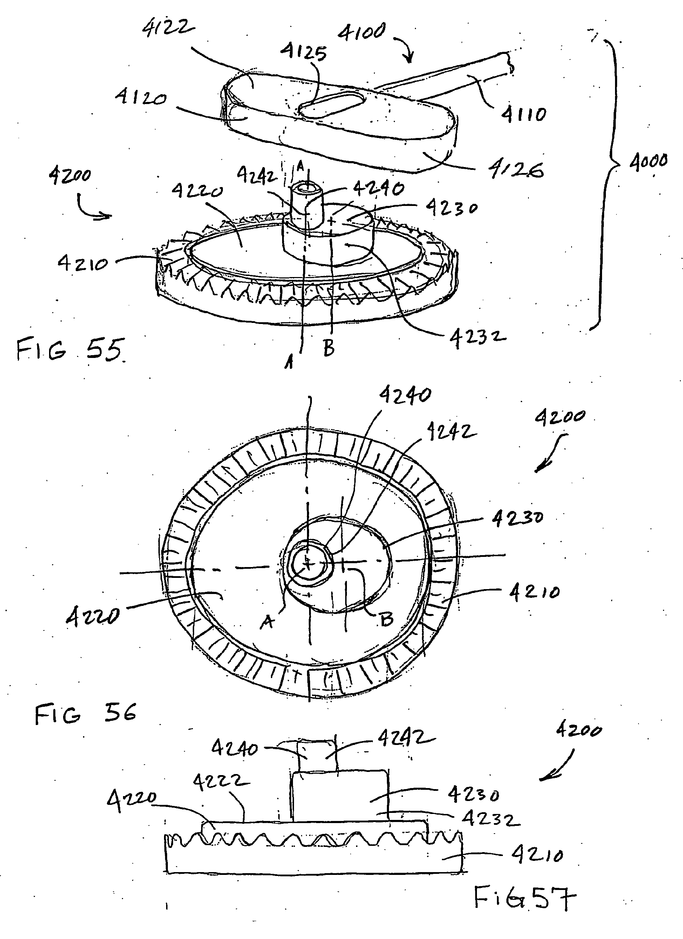

This preferred engagement assembly is illustrated in Figs. **55-60.** Fig. **55** illustrates a preferred embodiment assembly **4000** comprising a drive shaft **4100** and a gear **4200.** The drive shaft **4100** includes a shaft portion **4110** and a distal end having a partially enclosed elongated end **4120** that, as described below, provides a unique set of surfaces for engagement with cam surfaces of the gear **4200.** More specifically, Fig. **55** illustrates an oval-shaped aperture **4125** defined within a central region of the partially enclosed elongated end **4120.** The partially enclosed end **4120** includes an end cover **4122** which defines the aperture **4125.** Disposed about the periphery of the end cover **4122** is an end wall **4126.** Together, the cover **4122** and the wall **4126** provide a partial enclosure (not shown in Fig. **55)** that receives certain components of the drive gear **4200.**

Fig. **55** also illustrates the preferred gear **4200** of the assembly **4000.** The gear **4200** is similar to the gear **806** shown in Fig. **12,** gear **3356** shown in Fig. **48,** gear **3456** shown in Fig. **49,** and gear **3556** shown in Figs. **50** and **51**. That is, the mounting and function of the gear **4200** is similar to the mounting and function of those noted gears. However, the gear **4200** utilizes a unique collection of camming surfaces. Specifically, gear **4200** includes a plurality of gear teeth **4210** disposed about its periphery. A drive gear such as affixed to an electric motor is preferably engaged or otherwise coupled to the gear **4200,** and specifically to the gear teeth **4210.** A circular medial base **4220** extends along an outward face of the gear **4200** and between opposite regions of the gear teeth **4210.** Disposed on the base **4220** and extending outward therefrom is a first cam **4230** providing a circular cam surface **4232** extending about the periphery of the cam **4230.** Extending from the first cam **4230** is a second cam **4240.** The second cam **4240** provides a circular cam surface **4242** extending about the periphery of the second cam **4240.** It will be appreciated that the center of the second cam **4240** coincides with the center of the base **4220,** and the center of the gear **4200.** Thus, upon rotation of the gear **4200,** such as about the axis of rotation **A** shown in Fig. **55,** the second cam **4240** and the base **4220,** rotate about the same axis, i.e. axis **A.** The center of the first cam **4230** is shown in Fig. **55** as axis **B,** is spaced from, yet preferably parallel to, axis **A.**

Fig. **56** is a top planar view of the gear **4200**. Fig. **56** illustrates the arrangement of the first cam **4230** and the second cam **4240** with respect to each other, and the center of rotation **A** of the gear **4200**. Again, it will be noted that the center of the circular first cam designated as center **B** in Fig. **56** is spaced apart from the center (or axis of rotation) **A.**

Fig. **57** is a side elevational view of the gear **4200**. Fig. **57** further illustrates the configuration and arrangement of the gear teeth **4210,** base **4220,** the first cam **4230** and its cam surface **4232,** the second cam **4240** and its cam surface **4242.**

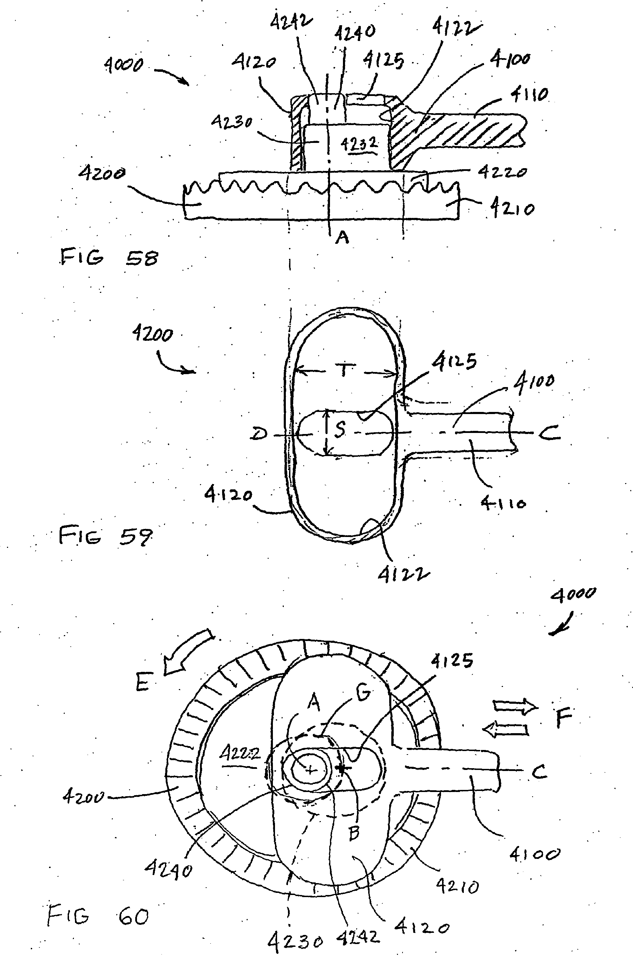

Fig. **58** is a partial cross-sectional side view of the assembly **4000** illustrating the elongated end **4120** of the drive shaft **4100** engaged with the gear **4200**. Specifically, it can be seen that the second cam **4240** is disposed within the aperture **4125** defined in the end **4120**. And, the first cam **4230** is enclosed by and received within the end **4120**. Preferably, the cam surface **4242** of the second cam **4240** engages and contacts portions of the surface of the elongated end **4120** that defines the aperture **4125**. And, preferably, the cam surface **4232** of the first cam **4230** engages and contacts portions of the interior and specifically, portions of an interior wall **4122** defined along the interior of the elongated end **4120**.

Fig. **59** illustrates the underside, i.e. the side of the elongated end **4120** of the drive shaft **4100** that faces the base **4220** of the gear **4200**. Fig. **59** further illustrates the interior wall **4122** which the cam surface **4232** of the first cam **4230** engages when the gear **4200** and drive shaft **4100** are engaged to form the assembly **4000**. Fig. **59** also illustrates the orientation of the aperture **4125**. Fig. **59** additionally illustrates two dimensions **S** and **T** as follows.

Dimension S is the minimum span or entrance dimension of the aperture **4125**. Since the second cam **4240** is received within the aperture **4125,** the diameter of the cam **4240** should be slightly less than dimension **S**. Alternatively, dimension S should be slightly greater than the diameter of the cam **4240**.

Dimension **T** is the minimum span or entrance dimension of the oval shaped interior wall **4122**. Since the first cam **4230** is received within the region generally bounded by the interior wall **4122,** the diameter of the cam **4230** should be slightly less than dimension **T**. Alternatively, dimension **T** should be slightly greater than the diameter of the cam **4230**.

Fig. **59** also illustrates a preferred orientation of the aperture **4125** within the end **4120**. As can be seen, the major axis of the oval shaped aperture **4125** depicted as axis **D,** is preferably parallel and most preferably co-extensive with, the longitudinal axis of the shaft portion **4110** of the drive shaft **4100,** depicted as axis **C.**

Fig. **59** additionally illustrates that the aperture **4125** is preferably oval-shaped and oriented at right angles to the oval-shaped interior region defined by the interior wall **4122**. That is, the major axis of the oval shaped aperture **4125** is preferably perpendicular to the major axis of the oval shaped interior region defined by the wall **4122**.

Fig. **60** is a top, planar view of the assembly **4000** further illustrating the arrangement, orientation, and configuration of the drive shaft **4100** and the gear **4200**. Upon rotation of the gear **4200** about axis **A,** such as in the direction of arrow **E,** the center of the first cam **4230** is rotated about axis **A** generally along the circular path **G**. Circular path **G** results from the first cam **4230** being displaced about the axis **A** as gear **4200** rotates. It will be appreciated that the radius of the circular path G corresponds to the amount of offset or spacing between the center points **A** and **B** shown in Fig. **55.**

As gear **4200** rotates, thus causing the first cam **4230** to be displaced about axis **A,** along the circular path **G,** a portion of the cam surface **4232** of the first cam **4230** engages various regions of the interior wall **4122**. This results in the end **4120** being linearly translated back and forth with respect to the center point of gear **4200** and axis **A**. Restated, this has the effect of causing the second cam **4240** to be linearly translated back and forth within the aperture **4125**. However, it will be appreciated that since the gear **4200** is essentially fixed at its point of rotation, i.e. axis **A,** it is the end **4120** and thus the drive shaft **4100** that is translated back and forth. The rotation of gear **4200** in the direction of arrow **E** causes reciprocation of the drive shaft **4100** in the direction of arrows **F** shown in Fig. **60.**

The preferred embodiment assembly **4000** efficiently converts rotary motion of the gear **4200** into 100% or substantially so, reciprocal motion of the drive shaft **4100**. That is, there is none or only an exceedingly minor degree of motion in a direction other than along the longitudinal axis **C** of the drive shaft **4100**. This characteristic is beneficial in that upon high operating speeds, vibration of the assembly is minimal, or at least maintained to acceptable levels.

In addition to its high operating efficiency characteristics, the embodiments of the toothbrushes described herein also provide relatively high brushing forces. An indication of this is that the embodiments of the toothbrush described herein provide a powered and relatively constant reciprocating stroke motion at their brush head even upon application of heavy loads. For instance, toothbrushes according to the present invention may operate under loads as high as 30 lbs applied to their brush heads and reciprocating bristle carriers.

An example of the relative high efficiency and low power consumption of the preferred embodiment drive mechanisms described herein, relates to battery usage. Nearly all comparable currently available electric toothbrushes require two (2) AA batteries for their operation. The embodiments of electric toothbrushes described herein preferably require only one (1) AA battery. It is remarkable and surprising that the present invention toothbrushes provide the same, or substantially the same, force and power characteristics at their brush heads, i.e. measured at the bristle ends, as comparable commercially available brushes; and yet only require approximately one-half of the power or battery requirements as those same brushes. It will be appreciated that in no way are the present invention toothbrushes limited to utilizing only a single (AA) battery. The present invention toothbrushes may utilize a wide variety of batteries, battery configurations, and power sources. The references to (AA) batteries are provided for ease in understanding and further describing the present invention toothbrushes and their low energy consumption characteristics. Generally, the present invention toothbrushes preferably operate from a voltage source of from about 0.5 volts to about 2.5 volts. More preferably, the present invention toothbrushes operate from a power source providing 1.5 volts. Most preferably, such a power source is rechargeable. Of course, the present invention toothbrushes may utilize disposable batteries. This "low energy consumption" feature is an aspect of the present invention toothbrushes that is particularly appealing from a commerciability standpoint.

An indication of this low energy consumption feature of the present invention toothbrushes is illustrated in the total run time of the toothbrushes. A testing apparatus was assembled in which a fixture and a one (1) pound weight were enclosed in a housing. A toothbrush that is to be tested is secured in the fixture, with its bristles directed upwards. The one pound weight is then placed on the brushing surface of the brush, i.e. the upwardly directed distal ends of the bristles. The surface of the weight corresponds to that of a typical dental surface. The toothbrush is then activated and the total elapsed time is measured until the toothbrush stops operating. Preferably, toothbrushes according to the present invention generally operate at least about 100 minutes, more preferably at least 120 minutes, more preferably at least 140 minutes, more preferably at least 160 minutes, and more preferably at least 180 minutes. It is contemplated that the present invention toothbrushes may operate under the described conditions up to as long as 210 to 220 minutes, and even longer. The foregoing noted testing conditions utilize a single (AA) battery. Generally, these total run times are measured using a voltage source of at least about 0.9 volts to about 2.5 volts, and employing a reciprocating bristle carrier having the noted stroke lengths and speeds.

As previously noted, an additional benefit of the embodiments of the toothbrush described herein is a relatively simple assembly. This results in reduced manufacturing costs. Furthermore, it is contemplated that the preferred embodiment drive assemblies described herein will provide increased reliability due to their simple and straightforward design. And, the relatively few number of components employed in these drive assemblies further reduces the potential for failures at their interconnections.

In the event a pinned engagement assembly is utilized, it is most preferred that the movable bristle carrier define an aperture accessible from its underside, similar to aperture 3254 illustrated in Fig. 47. Such aperture may extend only partially through the thickness of the bristle carrier (as shown in Fig. 47), or may extend entirely through that thickness to the other, top side of the carrier. The drive shaft, and specifically, the distal end, such as end 3206 shown in Fig. 47, is formed to either have a pin or pin-like extension from its distal end, or be adapted to engage a separate pin component. The pin (either a separate component or formed as part of the shaft) is fitted within the aperture defined in the bristle carrier. Other engagement assemblies are contemplated for use in conjunction with the present invention including, but not limited to, multiple pin engagement assemblies, latching mechanisms, threaded fasteners, and assemblies which are affixed together with adhesive or sonic welding.

It is contemplated that the various carriers described herein may be readily replaceable, and preferably, interchangeable with other carriers. Thus, a user could select a particular carrier from an assortment of different types and configurations. Upon selection, the user could readily attach that carrier to a desired toothbrush. Furthermore, it is envisioned that so-called variety packs or sample packs, each containing various types of carriers could be provided separately or in conjunction with an electric toothbrush. For example, if the movable bristle carriers described herein utilize a readily releasable engagement mechanism for connection to the drive mechanism, a collections or assortment of movable carriers could be promoted separately or in conjunction with the electric toothbrush.

It will be appreciated that any of the features and aspects of any of the embodiments of the toothbrush described herein may be combined with one or more of the features and aspects of other embodiments described herein.

The present invention may utilize features, aspects, components, materials, and characteristics from one or more of the following published patent applications or issued patents: WO 01/29128; U.S. Patent 6,000,083; U.S. Des. Patent 432,312; U.S. Des. Patent 433,814; U.S. Patent 6,178,579; U.S. Patent 6,189,693; U.S. Patent 6,311,837; U.S. published patent application 2002/0032941; U.S. Patent 6,360,395; and U.S. Patent 6,371,294.

Other than the particular materials noted or described herein, the various embodiments of the toothbrush and any components may be formed from conventional materials typically utilized for producing electric toothbrushes. Generally, the handle, neck, brush head, and other structural parts or components are formed from polypropylene. Polymeric blends for these parts or components may be used such as for example blends of ABS and one or more of Celcon™, Acetal™, and/or Delrin™. A wide array of self-lubricating materials are particularly preferred for forming drive train components.

**Claims**

**1.**   An electric toothbrush (1401) comprising a handle, a neck (1440), and a drive shaft **characterized in that**: (a) said handle is at a first end of the toothbrush having a motor disposed therein; (b) said neck extends from said handle, and further comprises a receiving member (1431) at a second end of the toothbrush, wherein said receiving member (1431) receives a plurality of bristle carriers to form a toothbrush head, wherein said plurality of bristle carriers comprises one or more static bristle carrier (1403) and one or more movable bristle carrier (1405), and wherein said one or more static bristle carrier (1403) and said one or more movable bristle carrier (1405) each independently slidingly engage said receiving member within separate channels defined by a surface of said receiving member; and (c) said drive shaft is operatively connecting said one or more movable bristle carrier to said motor, wherein said one or more movable bristle carrier moves in a direction substantially parallel to said longitudinal axis of said receiving member of the toothbrush.

2. An electric toothbrush (1401) according to claim 1, wherein said receiving member (1431) is free of bristles.

3. An electric toothbrush (1401) according to claim 1, wherein said receiving member (1431) has bristles disposed thereon.

4. The electric toothbrush (1401) according to any of the preceding claims, wherein said one or more movable bristle carrier (1405) is substantially encircled by said one or more static bristle carrier (1403).

5. The electric toothbrush (1401) according to any of the preceding claims, wherein said carriers (1403, 1405) are selected from the group consisting of static and movable carriers comprising: brush head tips, static bristle carriers, movable bristle carriers, elastomeric elements, therapeutic elements, tartar control elements, and dental tools, and any combination thereof.

6. The electric toothbrush (1401) according to any of the preceding claims, wherein said one or more movable carrier (1405) is nested within said one or more static bristle carrier (1403).

7. The electric toothbrush (1401) according to any of the preceding claims, wherein said one or more static bristle carrier (1403) is retained on said receiving member (1431) by connectors defined by an outer surface of said receiving member matable with connectors defined by an inner surface of said one or more static bristle carrier, preferably said matable connectors further comprise serrated teeth.

8. The electric toothbrush (1401) according to any of the preceding claims, wherein said one or more movable bristle carrier (1405) engages said drive shaft by receiving a protuberance into an aperture.

9. The electric toothbrush (1401) according to any of the preceding claims, wherein said one or more movable carrier (1405) reciprocates in said direction substantially parallel to said longitudinal axis of said receiving member (1431) of the toothbrush.

10. A kit comprising : (a) the toothbrush (1401) according to any of the preceding claims, and (b) one or more carriers selected from the group consisting of brush head tip carriers, static bristle carriers, movable bristle carriers, elastomeric element carriers, oral care composition carriers, and dental tool carriers, and any combination thereof.

**Patentansprüche**

1. Elektrische Zahnbürste (1401) mit einem Griff, einem Hals (1440) und einem Antriebsschaft, **dadurch gekennzeichnet, dass**: (a) der Griff an einem ersten Ende der Zahnbürste angeordnet ist, in dem ein Motor angeordnet ist; (b) der Hals von dem Griff absteht und ferner ein Aufnahmeteil (1431) aufweist, das an einem zweiten Ende der Zahnbürste angeordnet ist, wobei das Aufnahmeteil (1431) mehrere Bürstenträger zur Bildung eines Zahnbürstenkopfes aufnimmt, wobei die mehreren Bürstenträger einen oder mehrere statische Bürstenträger (1403) und einen oder mehrere bewegbare Bürstenträger (1405) aufweisen, und wobei der eine oder die mehreren statischen Bürstenträger (1403) und der eine oder die mehreren bewegbaren Bürstenträger (1405) jeweils unabhängig mit dem Aufnahmeteil (1431) in separaten Kanälen, die durch eine Oberfläche des Aufnahmeteils definiert sind, gleitbar zusammengreifen; und (c) der Antriebsschaft den einen oder die mehreren bewegbaren Bürstenträger betriebsmäßig mit dem Motor verbindet, wobei sich der eine bewegbare Bürstenträger oder die mehreren bewegbaren Bürstenträger in einer Richtung bewegt bzw. bewegen, die im Wesentlichen parallel zu der Längsachse des Aufnahmeteils der Zahnbürste verläuft.

**2.** Elektrische Zahnbürste (1401) nach Anspruch 1, bei der das Aufnahmeteil (1431) frei von Borsten ist.

**3.** Elektrische Zahnbürste (1401) nach Anspruch 1, bei der das Aufnahmeteil (1431) mit Borsten versehen ist.

**4.** Elektrische Zahnbürste (1401) nach einem der vorhergehenden Ansprüche, bei der der eine oder die mehreren bewegbaren Bürstenträger (1405) im Wesentlichen von dem einen oder den mehreren statischen Bürstenträgern (1403) umgeben sind.

**5.** Elektrische Zahnbürste (1401) nach einem der vorhergehenden Ansprüche, bei der die Träger (1403,1405) aus der Gruppe statischer und bewegbarer Träger gewählt sind, zu der zählen: Bürstenkopf-Aufsätze, Träger für statische Bürsten, Träger für bewegbare Bürsten, elastomere Elemente, therapeutische Elemente, Zahnbelagkontrollelemente, zahntechnische Werkzeuge und sämtliche Kombinationen derselben.

**6.** Elektrische Zahnbürste (1401) nach einem der vorhergehenden Ansprüche, bei der der eine oder die mehreren bewegbaren Träger (1405) in den einen oder den mehreren statischen Bürstenträgern (1403) eingebettet sind.

**7.** Elektrische Zahnbürste (1401) nach einem der vorhergehenden Ansprüche, bei der der eine oder die mehreren statischen Bürstenträger (1403) an dem Aufnahmeteil (1431) mittels Verbindungsteilen rückgehalten sind, die von einer Außenfläche des Aufnahmeteils gebildet ist, welche in passenden Zusammengriff mit von einer Innenfläche des einen oder der mehreren statischen Bürstenträger gebildeten Verbindungsteilen bringbar ist, wobei die in passenden Zusammengriff bringbaren Verbindungsteile vorzugsweise gezackte Zähne aufweisen.

**8.** Elektrische Zahnbürste (1401) nach einem der vorhergehenden Ansprüche, bei der der eine oder die mehreren bewegbaren Bürstenträger (1405) mit dem Antriebsschaft durch Aufnahme eines Vorsprungs in einer Öffnung zusammengreifen.

**9.** Elektrische Zahnbürste (1401) nach einem der vorhergehenden Ansprüche, bei der sich der eine bewegbare Träger (1405) oder die mehreren bewegbare Träger (1405) in einer Richtung hin- und herbewegen, die im Wesentlichen parallel zu der Längsachse des Aufnahmeteils (1431) der Zahnbürste verläuft.

**10.** Set mit: (a) der Zahnbürste (1401) nach einem der vorhergehenden Ansprüche, und (b) einem oder mehreren Trägern, aus der Gruppe gewählt sind, zu der zählen: Träger für Bürstenkopf-Aufsätze, Träger für statische Bürsten, Träger für bewegbare Bürsten, Träger für elastomere Elemente, Mundpflegesubstanzen-Träger, Träger für zahntechnische Werkzeuge und sämtliche Kombinationen derselben.

**Revendications**

**1.** Brosse à dents électrique (1401) comprenant un manche, un col (1440), et un arbre d'entraînement, **caractérisée en ce que** : (a) ledit manche est situé à une première extrémité de la brosse à dents comportant un moteur logé dans celle-ci ; (b) ledit col s'étend à partir dudit manche, et comprend en outre un élément de réception (1431) à une deuxième extrémité de la brosse à dents, dans laquelle ledit élément de réception (1431) reçoit une pluralité de supports de poils pour former une tête de brosse à dents, dans laquelle ladite pluralité de supports de poils comprend un ou plusieurs supports de poils statiques (1403) et un ou plusieurs supports de poils mobiles (1405), et dans laquelle ledit un ou plusieurs support(s) de poils statique(s) (1403) et ledit un ou plusieurs support(s) de poils mobile(s) (1405)) se logent chacun indépendamment de façon coulissante dans ledit élément de réception à l'intérieur de canaux séparés définis par une surface dudit élément de réception ; et (c) ledit arbre d'entraînement relie de façon fonctionnelle ledit un ou plusieurs support(s) de poils mobile(s) audit moteur, ledit un ou plusieurs support(s) de poils mobile(s) se déplaçant dans une direction sensiblement parallèle audit axe longitudinal dudit élément de réception de la brosse à dents.

**2.** Brosse à dents électrique (1401) selon la revendication 1, dans laquelle ledit élément de réception (1431) est dépourvu de poils.

**3.** Brosse à dents électrique (1401) selon la revendication 1, dans laquelle ledit élément de réception (1431) comporte des poils disposés sur celui-ci.

**4.** Brosse à dents électrique (1401) selon l'une quelconque des précédentes revendications, dans laquelle ledit un ou plusieurs support(s) de poils mobile(s) (1405) est sensiblement encerclé par ledit un ou plusieurs support(s) de poils statique(s) (1403).

5. Brosse à dents électrique (1401) selon l'une quelconque des précédentes revendications, dans laquelle lesdits supports (1403, 1405) sont choisis parmi le groupe constitué de supports statiques et mobiles comprenant : des embouts de tête de brosse, des supports de poils statiques, des supports de poils mobiles, des éléments élastomères, des éléments thérapeutiques, des éléments de suppression du tartre, et des outils dentaires, et une combinaison quelconque de ceux-ci.

6. Brosse à dents électrique (1401) selon l'une quelconque des précédentes revendications, dans laquelle ledit un ou plusieurs support(s) mobile(s) (1405) est logé à l'intérieur dudit un ou plusieurs support(s) de poils statique(s) (1403).

7. Brosse à dents électrique (1401) selon l'une quelconque des précédentes revendications, dans laquelle ledit un ou plusieurs support(s) de poils statique(s) (1403) est retenu sur ledit élément de réception (1431) par des éléments d'accouplement définis par une surface extérieure dudit élément de réception pouvant s'adapter à des éléments d'accouplement définis par une surface intérieure dudit un ou plusieurs support(s) de poils statique(s), lesdits éléments d'accouplement adaptables comprenant en outre de préférence des dents crénelées.

8. Brosse à dents électrique (1401) selon l'une quelconque des précédentes revendications, dans laquelle ledit un ou plusieurs support(s) de poils mobile(s) (1405) vient prise avec ledit arbre d'entraînement en recevant une saillie dans une ouverture.

9. Brosse à dents électrique (1401) selon l'une quelconque des précédentes revendications, dans laquelle ledit un ou plusieurs support(s) de poils mobile(s) va et vient dans ladite direction sensiblement parallèle audit axe longitudinal dudit élément de réception (1431) de la brosse à dents.

10. Kit comprenant : (a) la brosse à dents électrique (1401) selon l'une quelconque des précédentes revendications, et (b) un ou plusieurs supports choisis parmi le groupe comprenant des supports d'embout de tête de brosse, des supports de poils statiques, des supports de poils mobiles, des supports d'élément élastomère, des supports de composition de soin oral, et des supports d'outil dentaire, et une combinaison quelconque de ceux-ci.

FIG. 1

FIG. 2

FIG. 3

FIG. 4

FIG. 5

FIG. 6

FIG. 7

FIG. 8

FIG. 9

FIG. 10

FIG. 11

EP 1 713 413 B1

FIG. 12

822
820
852
852
818
816
860
840
812
814
808
806
800
810
804
830
802

35

FIG. 13

FIG. 14

FIG. 15

FIG. 16

FIG. 17

FIG. 18

FIG. 19

FIG. 20

FIG. 21

FIG. 21a

1440
1428 1424 1426
1425
1400
1453 1452 1454
1420

FIG. 22

1440
1424
1454 1452
1400
1434
1430
1420

FIG. 23

1440
1424 1454 1452
1400
1434
1430
1433

FIG. 24

FIG. 22 a

FIG. 23 a

FIG. 24 a

FIG. 25

FIG. 26

FIG. 27

FIG. 28

FIG. 29

FIG. 30

FIG. 31

FIG. 32

FIG. 33

1435

1403

1419

1441

**FIG. 25a**

1435

1405

1407

**FIG. 26 a**

86

1428

1431

141

1413

1417

**FIG. 27a**

FIG. 34

FIG. 35

FIG. 36

FIG. 37

FIG. 38

FIG. 39

**FIG. 40**

**FIG. 41**

**FIG. 42**

FIG. 43

FIG. 44

FIG. 45

FIG. 46

FIG. 47

EP 1 713 413 B1

FIG. 48

FIG. 49

EP 1 713 413 B1

FIG. 50

FIG. 51

FIG. 52

FIG. 53

FIG. 54

4122  4125  4100
4120  4110
4126

4000

4200  4242  A  4240
4220  4230
4210  4232
A  B

FIG 55

4240
4242  4200

4230
4220  4210
A  B

FIG 56

4240  4242  4200
4222
4220  4230
4232
4210

FiG 57

4242  4240  4122
4000  4120  4125  4100
4230  4110
4200  4232
4220
4210

A

FIG 58

4200

4125
4100

T

D  S  C

4120  4110

4122

FIG 59

4000

4125

E  A  G

F

4222

4200  C

B

4240  4100

4230  4242  4120  4210

FIG 60

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 850662 A
- WO 03082049 A
- WO 03103531 A
- US 5987688 A
- US 5735011 A
- US 5930860 A
- US 5926897 A
- US 5851551 A
- WO 09413870 A1
- WO 9804167 A1
- US 5226206 A
- US 5524312 A
- US 5383242 A
- US 5465444 A
- US 5504959 A
- US 5836030 A
- US 4845795 A
- US 5404608 A
- US 5359747 A
- US 5617601 A
- US 85066201 A
- US 11478002 A
- US 10128018 B
- US 6178579 B
- US 6006394 A
- US 4081876 A
- US 5046213 A
- US 5335389 A
- US 5392483 A
- US 5446940 A
- US 4894880 A
- WO 9923910 A
- US 5511275 A
- US 6314605 B
- US 361653 A
- WO 0129128 A
- US 6000083 A
- US 432312 A
- US 433814 A
- US 6189693 B
- US 6311837 B
- US 20020032941 A
- US 6360395 B
- US 6371294 B

**Non-patent literature cited in the description**

- **D.W. MACFARLANE.** The Stiffness of Toothbrushes. *Brit. Dent. Jour.,* 05 October 1945